# EUROPEAN PATENT SPECIFICATION

(11) **EP 2 306 421 B1**
(45) Date of publication and mention of the grant of the patent: **13.08.2014**
(21) Application number: 09771929.8
(22) Date of filing: 21.05.2009
(51) Int. Cl.: G08B 21/18, H04Q 11/00, H04J 3/16, H04B 10/272

(54) **AN OPTICAL ASSEMBLYMODULE, OPTICAL NODE, OPTICAL DISTRIBUTION SYSTEM AND THE MANAGEMENT METHOD THEREOF**
OPTISCHES FERTIGUNGSMODUL, OPTISCHER KNOTEN, OPTISCHES VERTEILUNGSSYSTEM UND VERWALTUNGSVERFAHREN DAFÜR
MODULE DE COMPOSANTS OPTIQUES, NOEUD OPTIQUE, SYSTÈME DE DISTRIBUTION OPTIQUE ET PROCÉDÉ DE GESTION

(30) Priority: 30.06.2008 CN 200810068236; 12.08.2008 CN 200810030125; 01.09.2008 CN 200810141749
(43) Date of publication of application: 06.04.2011
(73) Proprietor: Huawei Technologies Co., Ltd., Longgang District, Shenzhen Guangdong 518129 (CN)
(72) Inventor: ZHAO, Jun, Longgang District Shenzhen 518129 (CN); LI, De, Longgang District Shenzhen 518129 (CN); WU, Haining, Longgang District Shenzhen 518129 (CN); LIN, Huafeng, Longgang District Shenzhen 518129 (CN)
(74) Representative: Körber, Martin Hans
(86) International application number: PCT/CN2009/071908
(87) International publication number: WO 2010/000159

(56) References cited:
- CN-A- 1 866 790
- CN-A- 1 987 946
- JP-A- 2002 182 075
- US-A1- 2002 081 076
- US-A1- 2003 156 844
- US-A1- 2006 110 161

## Description

### FIELD OF THE INVENTION

The present invention relates to optical network communications, and in particular, to a method, a system and an optical adapter for detecting fiber connection states, an optical power splitter and a method for obtaining fiber connection states, and an optical element module, an optical node, an optical distribution system, and a management method.

### BACKGROUND OF THE INVENTION

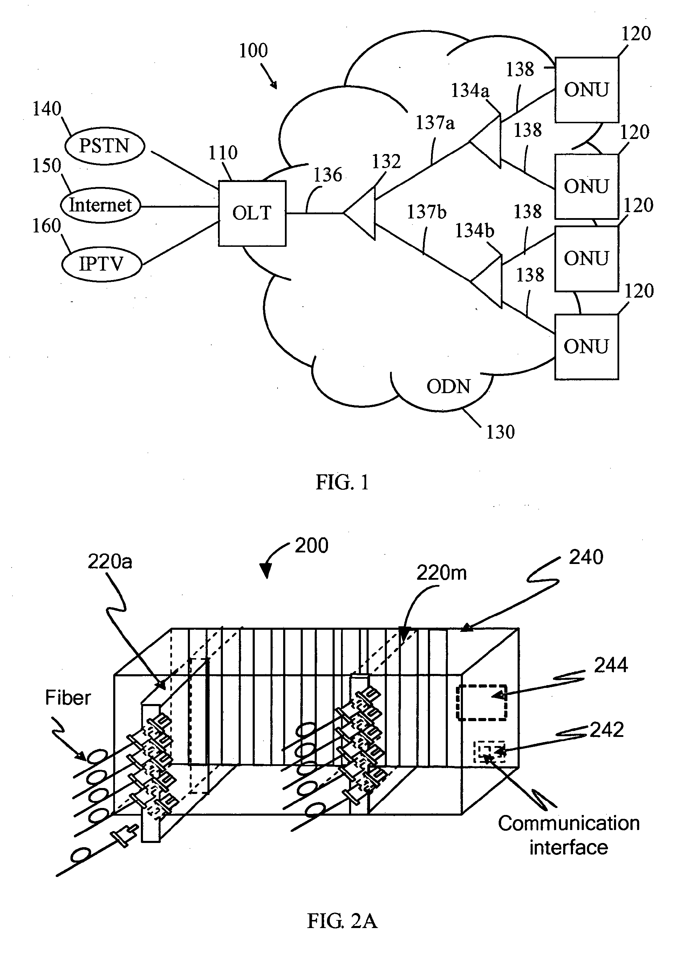

A passive optical network (PON) is a system that provides network access in the "last mile". FIG. 1 provides a schematic view of a PON 100 that includes an optical line terminal (OLT) located in a central office, an optical distribution network (ODN) 130, and a number of optical network terminals (ONTs) 120 located at the customer premises. The OLT 110 transfers the data from an upper level network, such as a public switched telephone network (PSTN) 140, an Internet 150, or an IP television (IPTV) system 160, to the ONTs 120 through the ODN 130. The uplink data of the ONTs 120 is transferred to the OLT 110 also through the ODN 130. The transmission may be based on time division multiple access (TDMA) and/or wavelength division multiple access (WDMA). The ONTs may be optical network units (ONUs). The ONT and the ONU have the same basic functions. The difference is: the ONT is located on the user side while the ONU is connected to the user through other networks such as an Ethernet.

A conventional ODN 130 is made up of passive devices only, including a feeder fiber/cable 136 connected with the OLT 110, branch optical fibers/cables 138 connected with the ONTs 120, and a passive optical power splitter 132 connecting the feeder fiber/cable 136 and the branch optical fibers/cables 138. Optionally, the ODN 130 may include multiple passive optical branching components, for example passive optical branching components 134a and 134b in addition to the passive optical power splitter 132, and the corresponding branch optical fibers/cables 137a and 137b.

For the purpose of reliability, the passive optical branching components 132, 134a, and 134b consist of passive devices only, including a wavelength division multiplexer (WDM) and a power splitter. The connecting devices include a fusion splice (FS) and a mechanical connector (MC) and the supporting devices include those used for supporting and line distribution such as a terminal box (TB) and an optical distribution frame (ODF).

A passive device is made of insulating materials and therefore has inherent advantages over active devices in resisting lightning strikes. The ODN made up of passive optical nodes only, however, also brings maintenance trouble due to its simplicity. In the prior art, troubleshooting is usually carried out together with network topology detection and transmission performance monitoring and a failure caused by an optical power splitter of the ODN is located only after both the ONT failure and fiber failure are eliminated. This adds to the difficulty of ODN maintenance and management. The work not only consumes time and labor but is also liable to mistakes. Moreover, the maintenance cost is high, so that the capital expenditure (CAPEX) and operating expenditure (OPEX) of the optical access system are always high.

The fiber adapter is normally a main part of the optical power splitter in the ODN or a key part of the MC in the ODN. In the engineering and later maintenance of the ODN, the fiber connection state of each fiber adapter must be known, which is generally completed through manual records. This not only consumes time and labor but is also liable to mistakes. Moreover, the maintenance cost is high, so that the CAPEX and OPEX of the optical access system are always high. Therefore, how to indicate the fiber connection states of the huge number of fiber connectors in an ODN becomes a natural consideration in ODN engineering.

In the engineering and later maintenance of the ODN, basic information such as the fiber connection state of each splitter must be known, which is generally completed through manual records. This not only consumes time and labor but is also liable to mistakes. Moreover, the maintenance cost is high, so that the CAPEX and OPEX of the optical access system are always high. Therefore, finding a solution to the maintenance problem caused by the conventional approach becomes a natural need of ODN engineering.

US 2002/081076 A1 describes an optical fiber connector adapter and system. In detail, when the second plug connector 47 is inserted into its adapter 11 until seated therein, spring members 36 and 38 are pressed into contact with each other, as explained hereinbefore, and the circuit to control member 51 is closed. Control member 51 then generates an "on" signal which is applied to switch 53 to turn the laser 49 on so that normal signal transmission can occur... The operator or installer is thus protected from the harmful effects of laser light energizing unimpeded from an unoccupied opening or receptacle in the adapter.

### SUMMARY OF THE INVENTION

The present invention provides an optical element module, an optical node, an optical distribution system, and a management method.

The present invention is implemented through the following technical solution:

According to the first aspect of the present invention an optical element module includes as set out in Claim 1.

According to the second aspect of the present invention an optical node includes as set out in Claim 5.

According to the third aspect of the present invention an optical distribution system includes as set out in Claim 10.

According to the fourth aspect of the present invention a fiber connection state management method used for managing the preceding optical element module includes as set out in Claim 11.

With the technical solution provided by the present invention, indication information of the connection state between the splitter core and an external fiber is generated, so that the fiber connection state information can be entered automatically without manual recording. This simplifies the fiber connection management on an ocean of optical branching components and reduces the OPEX.

### BRIEF DESCRIPTION OF THE DRAWINGS

FIG. 1 illustrates a PON system in a prior art;
FIG. 2A to FIG. 2E illustrate an optical node that includes no operation control module according to an embodiment of the present invention;
FIG. 3A to FIG. 3E illustrate an optical node that includes no operation control module according to another embodiment of the present invention;
FIG. 4A to FIG. 4C illustrate an optical node that includes an operation control module according to an embodiment of the present invention;
FIG. 5A to FIG. 5C illustrate an optical node that includes an operation control module according to another embodiment of the present invention;
FIG. 6 illustrates a fiber connection state management system according to an embodiment of the present invention;
FIG. 7 is a flowchart of a fiber connection state method according to an embodiment of the present invention;
FIG. 8 illustrates a fiber adapter in a prior art;
FIG. 9 is a flowchart of a fiber connection state detection method according to an embodiment of the present invention;
FIG. 10 illustrates a fiber adapter where a capacitor is set according to an embodiment of the present invention;
FIG. 11 illustrates a fiber adapter where an inductor is set according to an embodiment of the present invention;
FIG. 12 illustrates a fiber adapter where a Hall element is set according to an embodiment of the present invention;
FIG. 13 illustrates a voltage comparer according to an embodiment of the present invention;
FIG. 14 illustrates first composition of an optical power splitter according to an embodiment of the present invention;
FIG. 15 illustrates second composition of the optical power splitter according to an embodiment of the present invention;
FIG. 16 illustrates first composition of a connection state indicating module of the optical power splitter according to an embodiment of the present invention;
FIG. 17 illustrates second composition of the connection state indicating module of the optical power splitter according to an embodiment of the present invention;
FIG. 18 illustrates third composition of the optical power splitter according to an embodiment of the present invention;
FIG. 19 illustrates a connection between the optical power splitter and a fiber according to an embodiment of the present invention;
FIG. 20 illustrates fourth composition of the optical power splitter according to an embodiment of the present invention;
FIG. 21 illustrates fifth composition of the optical power splitter according to an embodiment of the present invention;
FIG. 22 illustrates sixth composition of the optical power splitter according to an embodiment of the present invention;
FIG. 23 illustrates a connection between the optical power splitter and a fiber according to an embodiment of the present invention; and
FIG. 24 is a flowchart of a fiber connection state obtaining method according to an embodiment of the present invention.

### DETAILED DESCRIPTION OF THE EMBODIMENTS

It should be understood that, although one or more exemplary embodiments of the present invention are described hereinafter, the system and/or method disclosed herein can be implemented by using many known technologies or prior arts. The present invention is by no means limited to the exemplary embodiments, accompanying drawings and techniques described herein, including the illustrated and described exemplary designs and implementations.

The half-passive optical node in all embodiments of the present invention is a system that can work during normal service transmission without the need to maintain a continuous power source. Power is required only in specific occasions, for example, installation, maintenance, or startup, where modules that require power on the optical node will start to work and consume power.

To better explain the purpose, technical solution, and benefits of the present invention, the embodiments of the present invention are described hereinafter in detail in exemplary ODN scenarios with reference to the accompanying drawings.

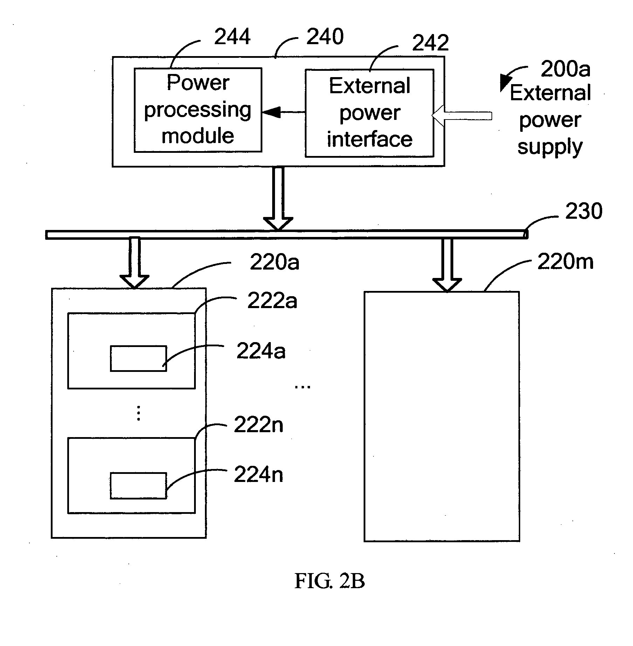

FIG. 2A illustrates a structure of the half-passive optical node (optical node 200) used in an ODN according to an embodiment of the present invention. FIG. 2B-FIG. 2E illustrate functions of the optical node 200. The optical node 200 illustrated in FIG. 2A includes multiple boards, at least one of which is a backplane 240. Multiple slots are set on the backplane 240 and one board can be inserted into each slot. The backplane 240 includes a power processing module 244 and an external power interface 242. When it is necessary to supply power to the optical node 200, external power can be fed to the power processing module 244 through the external power interface 242. The power processing module 244 converts the external power to the voltage and/or current fit for use of internal modules of the node. Other boards connected with the backplane 240 do not have an independent power processing module or an external power interface. They have no operation control board or operation control function either. A board connected with the backplane 240 includes at least one optical element module 220a. The optical element module 220a includes passive optical elements corresponding to multiple fiber adapters. Each fiber adapter provides a fiber port to couple a fiber. The optical element module 220a further includes a power interface that connects a power cable or power bus and feeds electrical power from the power cable or power bus to a state detecting unit (which is not shown in FIG. 2A). The state detecting unit is able to sense the fiber connection state of a fiber adapter. If powered, the state detecting unit includes a sensor and a state indicating unit. A parameter of the sensor has a specific relation to the change on the fiber connection state of the fiber adapter; the state indicating unit is coupled to the sensor and configured to a detect change on the sensor parameter and output an indication that indicates the state of a fiber port or the state of a fiber connection on the fiber port. The sensor is powered through the power processing module of the backplane. In the embodiment of the present invention, the half-passive optical node has no operation control board or operation control function. With such architecture, no active unit is running when the node is working normally, which helps to reduce electromagnetic interference and power consumption, and reduce costs.

The optical node 200a shown in FIG. 2B includes no operation control board or operation control function and no communication module. A power signal processed by the power processing module 244 is provided to corresponding modules in other boards (220a-220m) of the node through the power bus 230. Take the optical element module 220a as an example. The passive optical elements on the optical element module 220a correspond to the multiple fiber adapters 222a-222n. One fiber adapter is coupled to one sensor; for example, the fiber adapter 222a is coupled to the sensor 224a. The power processing module 244 does not feed power to the passive optical elements in normal conditions. The power processing module 244 feeds power to the sensors 224a-224n on the optical element module 220a through the power bus only in specific occasions, such as installation, maintenance and startup.

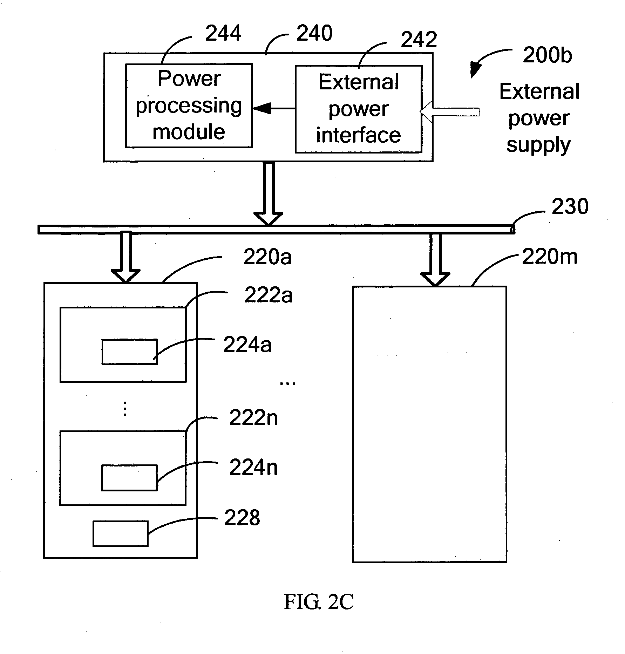

The optical node 200b shown in FIG. 2C is different from the optical node 200a shown in FIG. 2B in that: the optical element module 220a includes a signal processing and communication module 228, which is powered through the power bus 230. If powered, the signal processing and communication module 228 receives the indications outputted by the sensors 224a-224n that indicate the states of fiber ports or the states of fiber connections on the fiber ports; the signal processing and communication module 228 processes the indications of the states of fiber ports or the states of fiber connections on the fiber ports and reports them to an external signal processor. For other units shown in FIG. 2C, see related descriptions of the units shown in FIG. 2B.

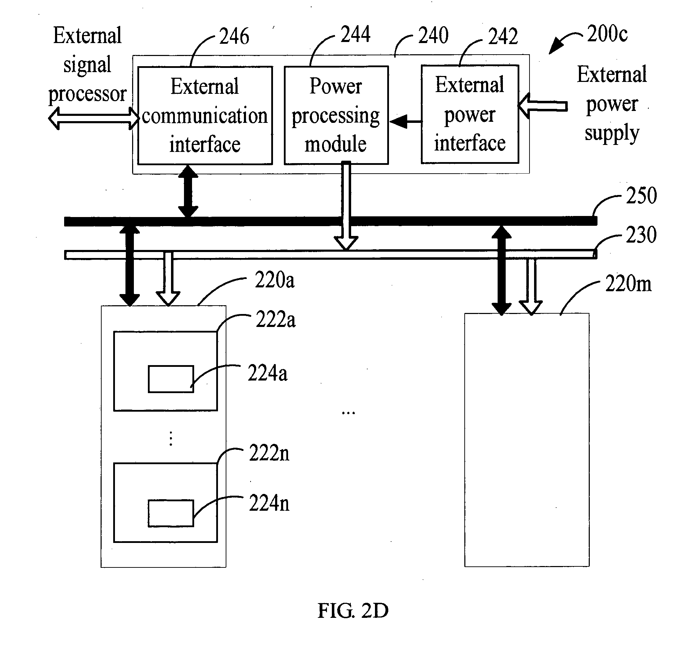

The optical node 200c shown in FIG. 2D is different from the optical node 200a shown in FIG. 2B in that: the backplane 240 of the optical node 200c further includes an external communication interface 246, and the indications outputted by boards connected to the backplane 240, such as the sensors 224a-224n on the optical element module 220a, are transferred to the external communication interface 246 through a signal bus 250. These indications indicate the states of fiber ports or the states of fiber connections on the fiber ports and are sent by the external communication interface 246 to an external signal processor. For other units shown in FIG. 2D, see related descriptions of the units shown in FIG. 2B.

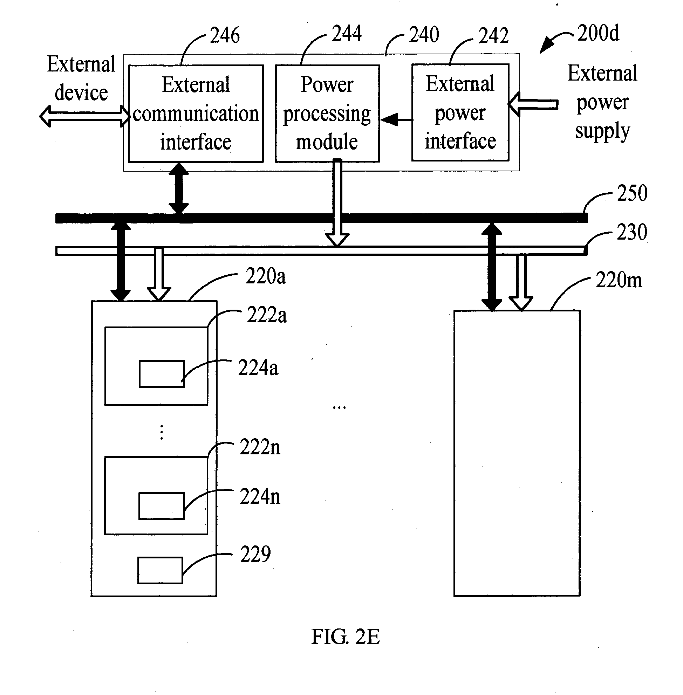

The optical node 200d shown in FIG. 2E is different from the optical node 200c shown in FIG. 2D in that: on the optical node 200d, a signal processing module 229 is set on boards connected to the backplane 240, such as the optical element module 220a. The signal processing module 229 processes the indications outputted by the sensors 224a-224n that indicate the states of fiber ports or the states of fiber connections on the fiber ports. The processed indications are transferred to the external communication interface 246 through the signal bus 250 and then sent by the external communication interface 246 to an external signal processor. For other units shown in FIG. 2E, see related descriptions of the units shown in FIG. 2D and FIG. 2B.

It should be noted that the communication interface 246 and the external power interface 242 may be of a same type. For example, they may both be universal serial bus (USB) ports. This will reduce the complexity of device types. The passive optical elements set on the optical element module 220a-220m may be splitters (0-n), or automatic optical distribution modules (in this case, an automatic optical distribution frame is created), or common optical distribution modules.

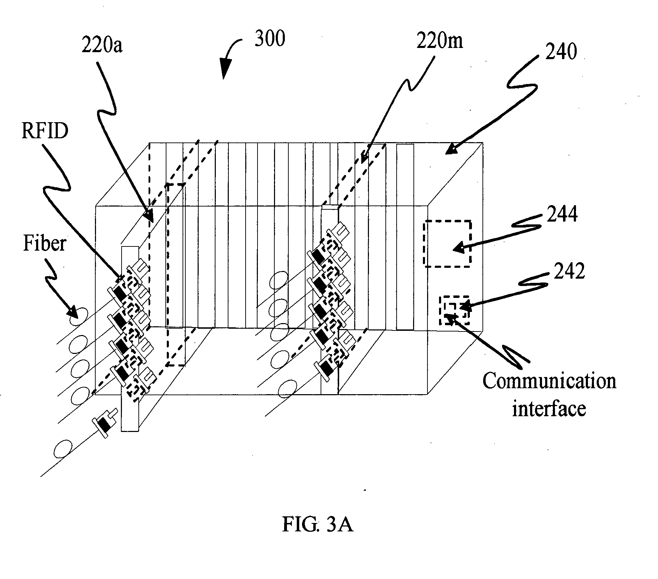

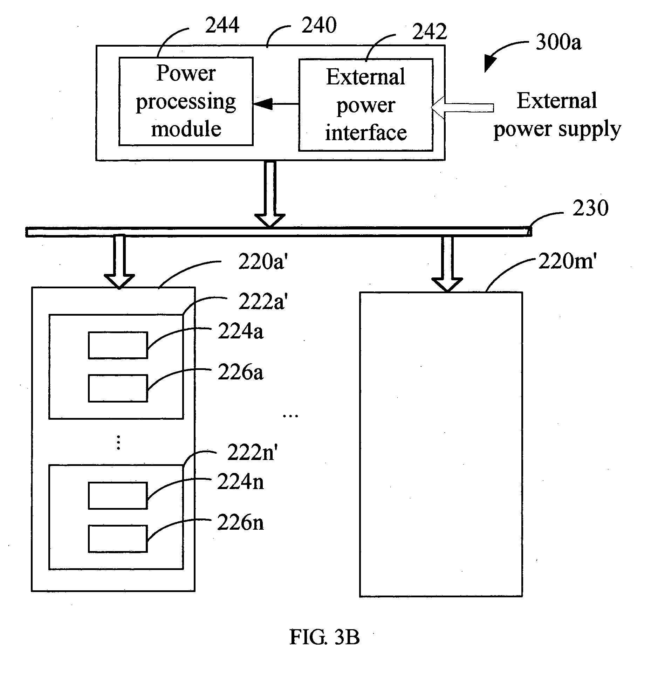

FIG. 3A illustrates a structure of the half-passive optical node (optical node 300) used in an ODN according to an embodiment of the present invention. FIG. 3B-FIG. 3E illustrate functions of the optical node 300. FIG. 3A is different from FIG. 2A in that: the optical node 300 adopts the radio frequency identification (RFID) technology. The optical node 300 shown in FIG. 3A does not provide a tag reader but sets RFID tags associated with fiber adapters. Each RFID tag includes a forwarder unit. When an external tag reader transmits a radio frequency signal through the forwarder unit, the forwarder unit returns a tag reply that includes encoded ID data. Each ID tag used is a passive tag, which does not have its own power supply but is entirely dependent on the energy radiated by the tag reader. The passive tag reader can activate the energy of any existing passive tag through radiation and thereby can continuously or periodically search for passive tags existing near the tag reader. Unless being activated by the passive tag reader, a passive tag does not report its existence. In addition, the passive tag must receive enough radio frequency power which, when converted to an electric current, will support the operation of the electric circuit of the tag. In the embodiment of the present invention, the use of passive tags reduces external misoperations on the tags during normal working and prevents the failure of active tags due to the exhaustion of power.

The optical node 300a shown in FIG. 3B has the same basic functional architecture as the optical node 200a shown in FIG. 2B. The difference is that: the fiber adapters 222a'-222n' corresponding to the passive optical elements set on the one or more boards such as 220a', are respectively coupled to ID tags 226a-226n. Other units shown in FIG. 3B are the same as those shown in FIG. 2B.

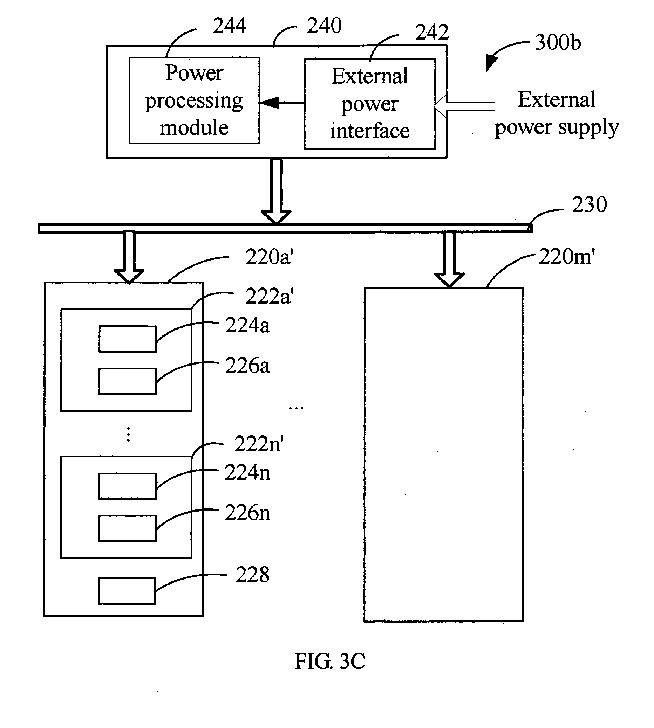

The optical node 300b shown in FIG. 3C has the same basic functional architecture as the optical node 300a shown in FIG. 3B. The difference is that: the optical element module 220a' of the optical node 300b includes a signal processing and communication module 228, which is also powered through the power bus 230. If powered, the signal processing and communication module 228 receives the indications outputted by the sensors 224a-224n that indicate the states of fiber ports or the states of fiber connections on the fiber ports; the signal processing and communication module 228 processes the indications of the states of fiber ports or the states of fiber connections on the fiber ports and reports them to an external signal processor.

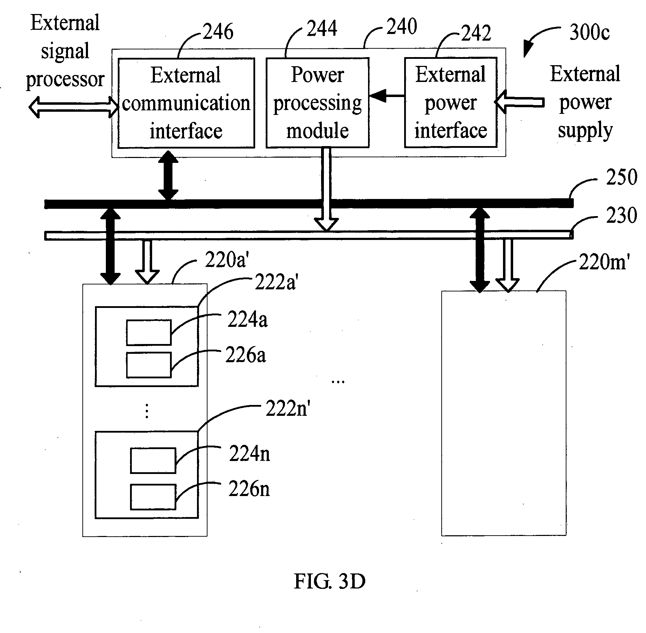

The optical node 300c shown in FIG. 3D is different from the optical node 300a shown in FIG. 3B in that: the backplane 240 of the optical node 200c further includes an external communication interface 246, and the indications outputted by boards connected to the backplane 240, such as the sensors 224a-224n on the optical element module 220a, are transferred to the external communication interface 246 through a signal bus 250. These indications indicate the states of fiber ports or the states of fiber connections on the fiber ports and are sent by the external communication interface 246 to an external signal processor.

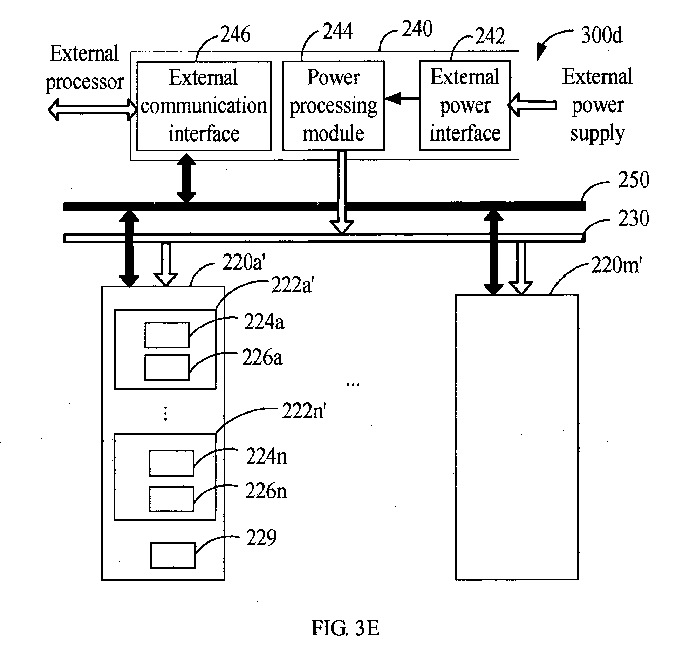

The optical node 300d shown in FIG. 3E is different from the optical node 300c shown in FIG. 3D in that: on the optical node 300d, a signal processing module 229 is set on boards connected to the backplane 240, such as the optical element module 220a'. The signal processing module 229 processes the indications outputted by the sensors 224a-224n that indicate the states of fiber ports or the states of fiber connections on the fiber ports. The processed indications are transferred to the external communication interface 246 through the signal bus 250 and then sent by the external communication interface 246 to an external signal processor.

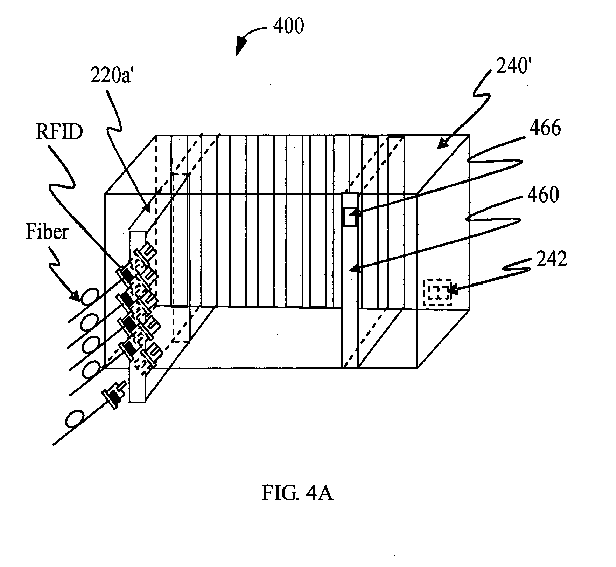

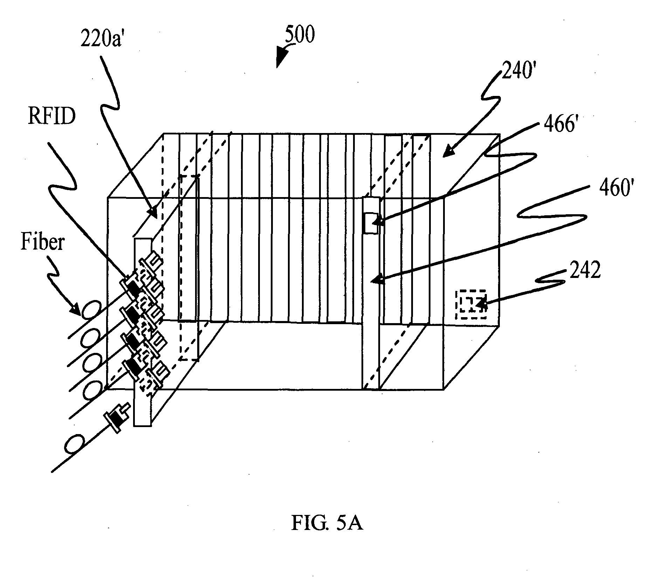

In another embodiment of the present invention, the half-passive optical node includes an operation control board, such as the optical node 400 and the optical node 500 shown in FIG. 4A and FIG. 5A.

FIG. 4A illustrates a structure of the optical node 400. The optical node 400 includes a backplane 240', where no power processing module is set. The backplane 240' includes an external power interface 242. When it is necessary to supply power to the optical node 400, external power can be fed in through the external power interface 242. The backplane 240' also includes multiple slots, each allowing the insertion of one board. One of the other boards connected to the backplane 240' is an operation control board 460 that includes a power processing module, an operation control module (not shown in FIG. 4A), and a passive tag reader 466 (such as an RFID reader interface). Power fed to the power processing module is still supplied through the external power interface 242. The operation control board 460 further includes. Another board connected to the backplane 240' is an optical element module 220a', where passive optical elements are set. The passive optical elements correspond to multiple fiber adapters. Each fiber adapter provides an external fiber port. Particularly, sensors (not shown in FIG. 3A) able to sense the fiber connection states of the fiber adapters are set on the optical element module 220a'. If powered, the sensors can output indications of the states of fiber ports or the states of fiber connections on the fiber ports. The sensor is powered through the power processing module of the backplane. In the embodiment of the present invention, the main active units of the half-passive optical node are separated from its passive units. This further reduces electromagnetic interference and facilitates manufacturing. This also enables centralized heat dissipation and reduces the impacts of the ambient temperature on the passive optical elements.

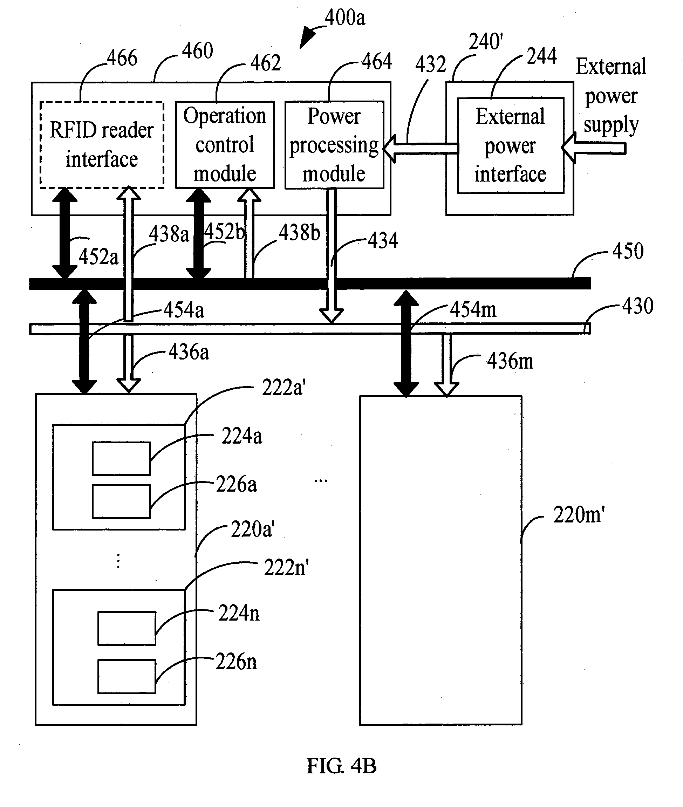

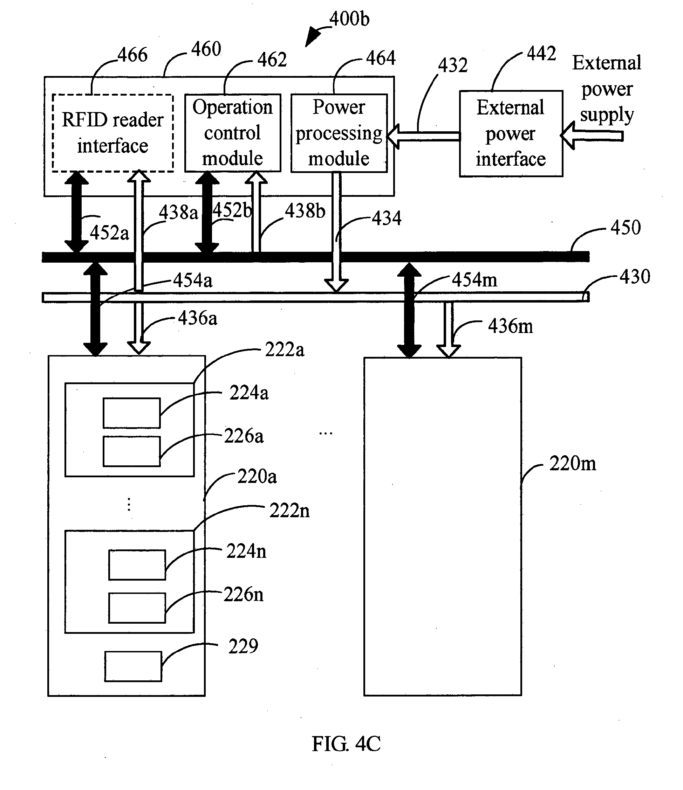

FIG. 4B and FIG. 4C illustrate functions of the optical node 400 shown in FIG. 4A. On the optical node 400a shown in FIG. 4B, the operation control board 460 includes a power processing module 464, an operation control module 462, and an RFID reader interface 466. The power processing module 464 receives power through the external power interface 244 set on the backplane 240', converts the external power into a voltage and/or current fit for use of the internal modules, and feeds power to units requiring power on other boards through a power bus 430. For example, the power processing module 464 feeds the voltage or current to the power bus 430 through a power branch line 434 and the power bus 430 distributes power to units requiring power through branch lines 438a, 438b, 436a, ..., and 436m. The optical node 400a further includes a signal bus 450. Data to be transmitted on all boards can be transferred through signal branch lines (such as 452a, 452b, 454a, and 454b) and the signal bus 450 and outputted through the RFID reader interface.

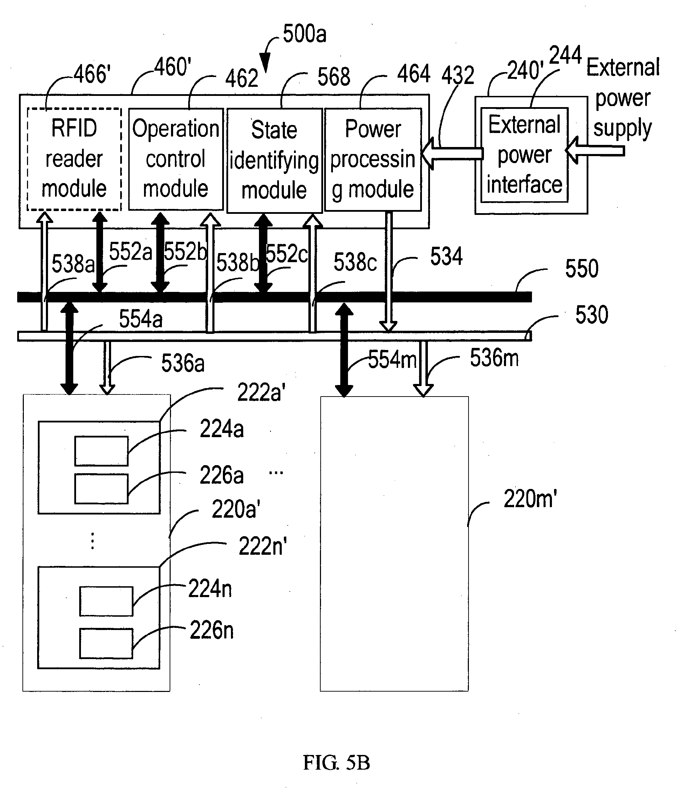

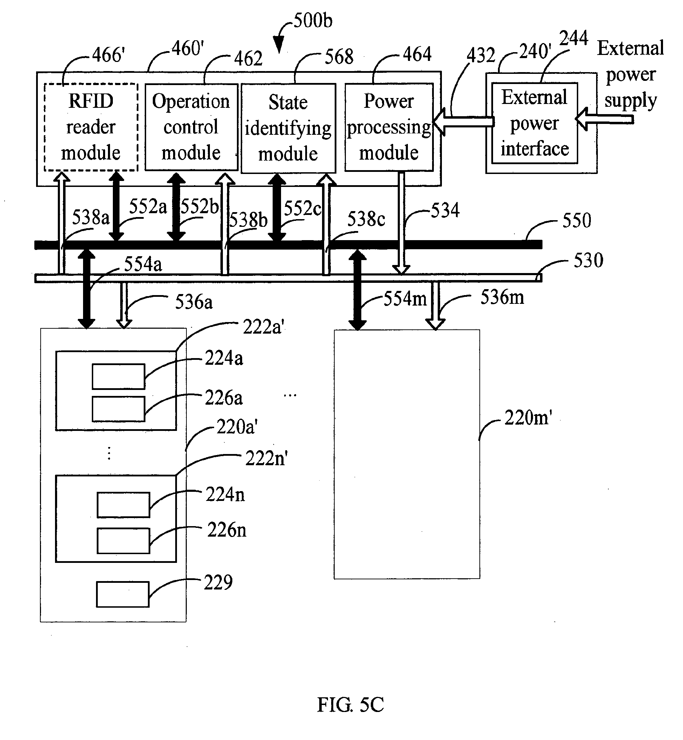

The optical node 500 shown in FIG. 5A is different from the optical node 400 shown in FIG. 4A in the operation control board 460'. The operation control board 460' is described in detail with reference to FIG. 5A and FIG. 5B. In FIG. 5B, the operation control board 460' includes an RFID reader 466' and a state identifying module 568. The optical node 500a further includes a signal bus 550. Data to be transmitted on all boards can be transferred through signal branch lines (such as 552a, 552b, 552c, 554a, ..., and 554m) and the signal bus 450. The difference between FIG. 5C and FIG. 5B is that: the optical element module 220a' of the optical node 500b includes a signal processing module 229 that processes the indications outputted by the sensors 224a-224n that indicate the states of fiber ports.

All the preceding embodiments of the present invention are applicable to an optical distribution system that is built into racks so that the equipment is more compact. Specifically, the optical distribution system includes at least one cabinet, each including at least one optical element module. The optical element module is the same as that shown in any one of FIG. 2A to FIG. 5C and will not be described here again. The optical distribution system further includes one or multiple boards and a power bus. At least one board includes an external power interface. The power bus is configured to connect the optical element module and the board that includes the external power interface so as to feed power to the optical element module through the power bus. Specifically, a power supply apparatus outside or inside the cabinet is connected to the external power interface. Power is fed to the power bus through the power bus port on the board and then transferred to the units requiring power on the optical element module. The board that includes the external power interface may be a backplane connected with the optical element module, or an operation control board connected with the backplane. In addition, the optical distribution system may set electronic processing units in a centralized manner on one board or in a distributed manner on different boards. For example, one or multiple of the following modules are set on the backplane: operation control module, state collecting module, RFID reading and identifying module, storing module, and communication module; or an external power interface is set on the backplane, an operation control module is set on the operation control board, and other modules are set on the backplane or the operation control board. The operation control module controls operations on one or more of the following modules: state collecting module, RFID reading and identifying module, storing module, and communication module. The operation control includes: collecting the fiber connection states, controlling RFID reading and identifying operations, mapping the connection state of a fiber to the RFID tag of the fiber, generating fiber connection state alarms, storing information related to the connection states of fibers, and reporting information related to the connection states of fibers.

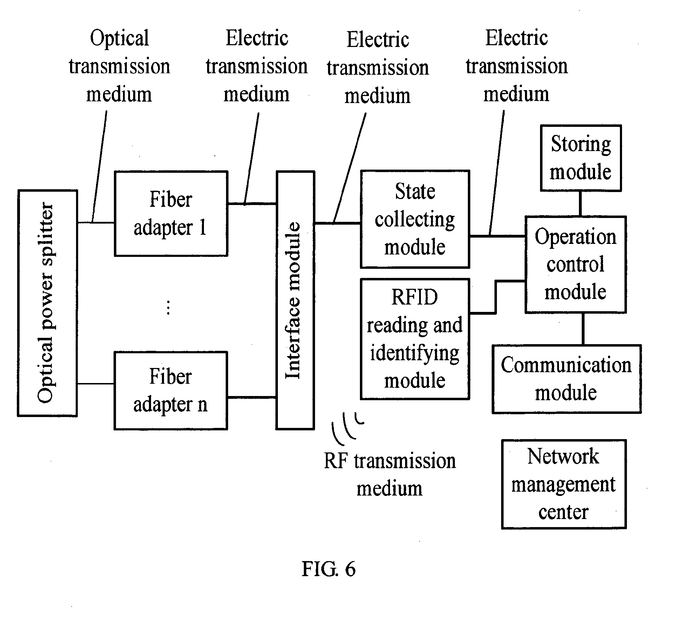

For description purposes, a fiber connection state management system provided according to an embodiment of the present invention can be abstracted into several modules: state collecting module, RFID reading and identifying module (optional), operation control module, communication module (the communication module may communicate with the network management center through a radio channel, or through a local area network, or any other channel or medium). The network management center includes an operation and maintenance center, an optical node locating module (optional), and a database module. The preceding modules may be set on one device or distributed on multiple devices as logical modules. The working principle of the fiber connection state management system is described with reference to an optical node that includes an RFID reading and identifying module (as shown in FIG. 6). In practice, the RFID reading and identifying module may be set outside the optical node. In this case, the communication interface for data transfer between the modules changes while the working principle is basically the same as that of a system where the RFID reading and identifying module is integrated on the optical node. The optical node itself does not map fiber IDs to fiber port IDs and still guarantees that the fiber connection states on the fiber ports can be correctly identified and managed. In addition, those skilled in the art can derive changes on data mappings when the modules of the system shown in FIG. 6 are divided and recombined from the data mappings of the system shown in FIG. 6. Such changes still fall within the scope of the present invention.

FIG. 6 provides a schematic view of the fiber connection state management system according to an embodiment of the present invention. In FIG. 6, the optical element module includes an optical power splitter and n fiber adapters (1-n). The fiber ports of the n branches of the splitter are respectively coupled to the n fiber adapters (1-n). The fiber adapters 1-n are connected to the state collecting module through one or more interface modules (including a power interface and a signal interface). The state collecting module is connected to the operation control module. The RFID reading and identifying module is connected to the operation control module. The storing module is configured to store information related to the connection states of fibers. The communication module reports the information related to the connection states of fibers. Every fiber adapter in FIG. 6 includes a sensor that is able to sense the connection state of a fiber in a fiber adapter. The preceding modules may be set on one device and distributed on multiple devices as logical modules. Based on the preceding module division, the fiber connection state management system implements the following functions:

### 1. Collection of initial data

The application scenario of initial data collection is where the optical interface is initially installed in the predetermined position and fibers are initially connected to fiber ports on the optical node. This means the fiber ports on the optical node are under control when initially installed. The RFID reading and identifying module reads the RFID information of the RFID tags of the fibers to be inserted; the state collecting module checks whether a new fiber is inserted to the corresponding fiber port on a fiber adapter; if a new fiber is inserted, the operation control module maps the inserted fiber to the state of the fiber port on the fiber adapter and generates a mapping between the state of the fiber port on the fiber adapter and the ID of the inserted fiber; the operation control module may also map the inserted fiber to the fiber port of the fiber adapter and generate a mapping between the ID of the fiber port on the fiber adapter and the ID of the inserted fiber. The operation control module may control the communication module to notify the mapping information to the operation and maintenance center of the network management center through the communication module so that the operation and maintenance center refreshes its ODN information database (located on the database module).

The preceding mapping records may be included in one mapping entry. In the mapping entry, each group of mapping information includes a fiber ID, a fiber port ID, and a fiber port state that are associated with each other. The fiber port state further includes the fiber connection state (on or off), fiber port working state (active or idle), and fiber port usage state (control, installation, or maintenance). Such classification facilitates fine management of fiber ports. Specifically, the port ID of a fiber port can be used as the ID of the fiber port. Or, the ID of the fiber adapter corresponding to the fiber port can be used as the ID of the fiber port. For example, if an RFID tag is attached to the fiber adapter, the RFID information on the RFID tag attached to the fiber adapter can be used as the ID of the fiber port. Operations of the RFID reading and identifying module and the state collecting module are controlled by the operation control module to ensure that the reading and identification of RFIDs and the collection of fiber connection states are compliant with the required procedures and ensure that operators follow the predefined procedures, so that the database module is correctly updated.

### 2. Collection of new connection state data of a fiber when the connection state of the fiber changes

An application scenario is the collection of incremental installation data, which is the data collection during a maintenance process. In this case, some fiber ports on the optical node are active and other fiber ports are idle. Incremental installation is the installation of fibers on unused fiber ports. That is, fibers are inserted to unused fiber ports. Therefore, the fiber connection state management system follows the same procedure in incremental installation as in initial installation. The procedure is not described here again.

Another application scenario of the embodiment of the present invention is the collection and update of data during maintenance.

When a fiber is inserted:

The procedure is like initial data collection with a difference in the refresh of the database.

When a fiber is removed:

The state collecting module will detect that the fiber is removed and the operation control module will notify the operation and maintenance center to refresh the database through the communication interface.

The refresh operation may be completed according to actual needs. It is not in the scope of the present invention and will not be further detailed here.

### 3. Maintenance: detection of incorrect insertion

After the ODN database is created based on the initial data collected at initial installation, a data mapping like the following is maintained:

### (1) Fiber not inserted to fiber port

State of the fiber port or the connection state of the fiber on the port (off) - ID of the fiber (RFID ID of the fiber) or ID of the fiber port (port ID or RFID ID of the fiber port), for example, ID of the fiber {NULL}

### (2) Fiber correctly inserted to fiber port

State of the fiber port or the connection state of the fiber on the port (on) - ID of the fiber (RFID ID of the fiber) or ID of the fiber port (port ID or RFID ID of the fiber port), for example, ID of the fiber {CNC12345678F}

When an incremental fiber is inserted to an idle fiber port: state of the fiber port or connection state of the fiber on the port (on) - ID of the fiber (RFID ID of the fiber) or ID of the fiber port (port ID or RFID ID of the fiber port), for example, ID of the fiber {CNC12345679F} (new fiber)

When a maintenance operation is required, a fiber must be first removed, in which case:

When the fiber is removed, the mapping is updated to: state of the fiber port or the connection state of the fiber on the port (M) - ID of the fiber (RFID ID of the fiber) or ID of the fiber port (port ID or RFID ID of the fiber port), for example, ID of the fiber {CNC12345678F}.

When the fiber is correctly inserted again, the mapping is updated to: state of the fiber port or connection state of the fiber on the port (on) - ID of the fiber (RFID ID of the fiber) or ID of the fiber port (port ID or RFID ID of the fiber port), for example, ID of the fiber {CNC12345678F}.

When a fiber is incorrectly inserted, the mapping is updated to: state of the fiber port or connection state of the fiber on the port (W) - ID of the fiber (RFID ID of the fiber) or ID of the fiber port (port ID or RFID ID of the fiber port), for example, ID of the fiber {CNC12345680F}.

In this case, the fiber connection state management system generates an alarm. The form of the alarm can be defined as required and the alarm forms in prior arts can be referenced.

According to the change on the mapping relation, it is easy to detect whether incorrect insertion has occurred.

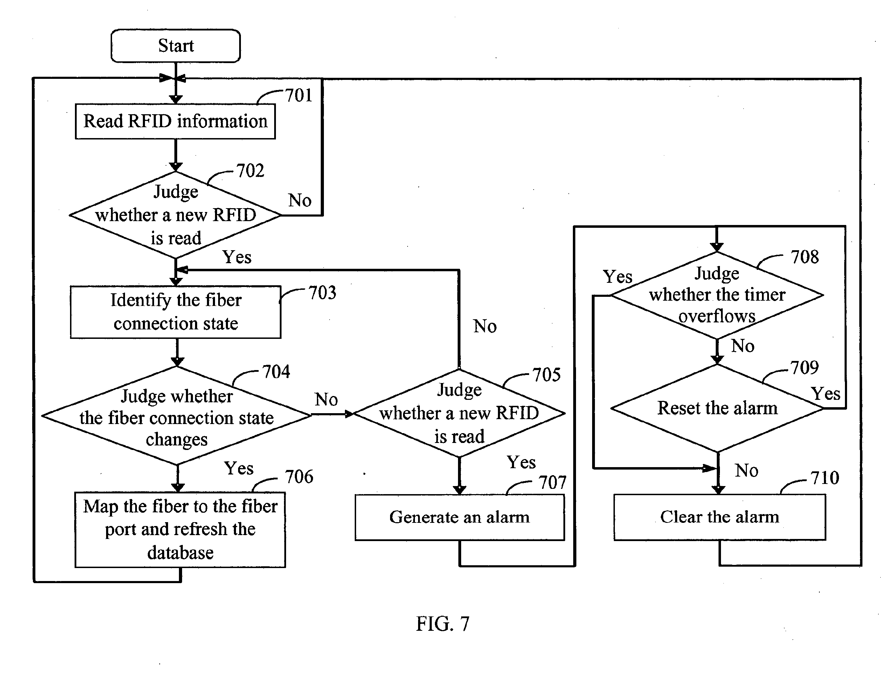

The management method provided according to the embodiment of the present invention (shown in FIG. 6) is described in detail with reference to FIG. 7. The method includes:
S700. Supply power to the sensor on a fiber adapter. The power supply control may be that the fiber adapter is connected manually to an external power source, or that the operation control module activates/deactivates the power supply.
S701. The RFID reading and identifying module activates an RFID tag on the fiber and reads the RFID information on the tag. Specifically, the RFID reader in the RFID reading and identifying module reads the RFID information on the RFID tag of the inserted fiber and sends the RFID information to the operation control module. If an RFID tag is also attached to the fiber adapter, the RFID reading and identifying module activates the RFID tag on the fiber adapter, reads the RFID information on the tag, and sends the RFID information to the operation control module.
S702. The operation control module judges whether a new RFID is read, or whether the read RFID information already exists. If the read RFID does not exist (that is, the RFID is new), step S703 is executed; or else the procedure goes back to step S701 to process a next RFID tag.

Preferably, a check is performed to determine whether the RFID information on the RFID tag of the fiber matches the RFID information on the RFID tag of the fiber adapter and whether insertion is allowed. Specifically, the check may be performed locally by the operation control module or the information is sent to the network management center for a remote check.

S703. The state collecting module reads an indication of the fiber port state outputted by a port of the optical element module.

Specifically, the state detecting unit in the optical element module senses the change on the fiber connection state if powered. The parameter of the sensor of the state detecting unit has a specific relation to the change on the fiber connection state in the fiber adapter. For example, the sensor is a capacitor, or an inductor, or a Hall element. If power is supplied, the parameter of the sensor in the fiber adapter responds to the change on the fiber connection state. This means, the change on the fiber connection state (such as the change on fiber existence, insertion of a fiber, and removal of a fiber) causes a change on the electric field or magnetic field in the cavity that accommodates the fiber, and further causes a change in the parameter of the sensor. The state indicating unit of the state detecting unit detects the parameter changes of the sensor and outputs a fiber port state indication. The state indication may be a digital signal made up of 0s and 1s indicated by high and low levels or other predefined signals.

The state collecting module outputs the state indication signal according to a predetermined state coding rule. The state indication signal is directly sent to the operation control module.

S704. The operation control module receives the state indication signal outputted by the state collecting module and judges whether the fiber connection state changes accordingly. If it determines that the fiber connection state does not change, the procedure goes to step S705, or else, to step S706.

S705. The operation control module judges whether a new RFID is read. If it determines that no new RFID is read, the procedure goes back to step S703, or else, to step S707.

S706. The operation control module maps the RFID to the fiber adapter and sends the mapping information to the network management center for database refreshing. Then the procedure goes back to step S701.

S707. The operation control module outputs an alarm, for example, an audible and visual alarm or only a visual alarm, to warn of an incorrect operation. In this case, no ID reading or state identification is allowed, to prevent possible disorder of the ODN database caused by illegal operations and prevent unnecessary rework.

S708-S710. When the system is in the alarm state, ID reading and state identification are not allowed until the alarm is cleared. The alarm can be cleared in two approaches: through manual clearance; or through an alarm clearance timer. In the latter case, when the system enters the alarm state, an alarm clearance timer is started, and when the timer overflows, the alarm is cleared. Optionally, when the alarm clearance timer overflows, step S709 is executed to judge whether to reset the alarm. If the alarm is not to be reset, step S701 is executed to clear the alarm; if the alarm is to be reset, step S708 is repeated to restart the alarm clearance timer.

As described in the background of the present invention, the optical node in the prior art is made up of passive optical devices only and is unable to report actively its basic information and its connection status with other optical nodes or optical fibers/cables, and therefore, such maintenance related information can be obtained through only manual records during installation. The conventional ODN installation and maintenance are time and labor consuming and the maintenance cost is high, so that the CAPEX and OPEX of the entire optical access system are always high. The technical solution disclosed by the embodiments of the present invention frees ODN engineering from the conventional manual approach. It saves time and labor and enables automatic entry of information. The information is simple and maintenance is easy. Thus, the technical solution of the present invention reduces the OPEX of the operator fundamentally.

An embodiment of the present invention provides a method, system, and fiber adapter for detecting fiber connection states, which can overcome the low reliability, high environment requirement, and complex implementation of fiber adapters in the prior art which indicate the state of a fiber connection with an electric switch. To better explain the purpose, technical solution, and benefits of the present invention, the embodiments of the present invention are described in detail with reference to the accompanying drawings.

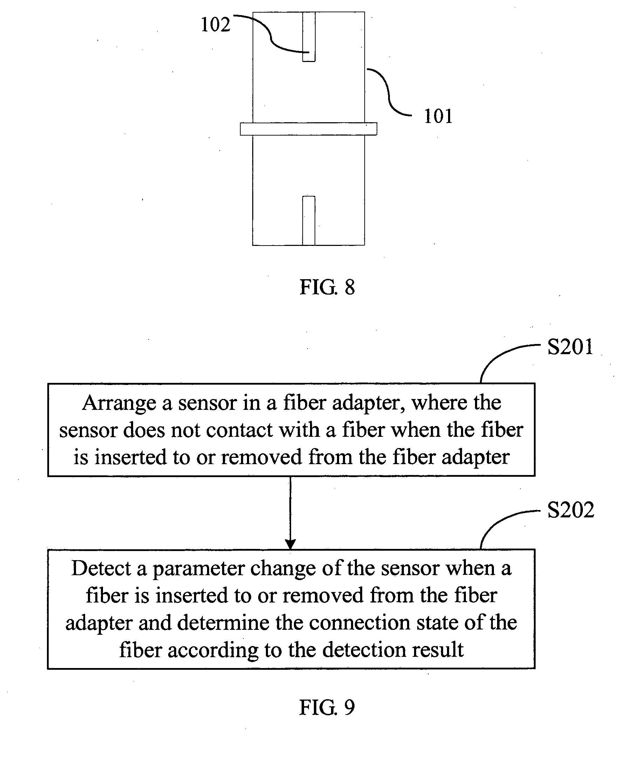

FIG. 8 illustrates a fiber adapter in the prior art. Here, an SC fiber adapter is taken as an example. The fiber adapter can connect at least two fibers. It includes a shell 101 and cavities 102.

The shell 101 creates at least two cavities that are located at two relative ends of the shell.

The cavities 102 are configured to accommodate the insertion or removal of fibers.

FIG. 9 is a flowchart of the method for detecting fiber connection states according to an embodiment of the present invention. The method includes the following steps:
S201. Set a sensor in the fiber adapter, where the sensor does not contact a fiber when the fiber is inserted to or removed from the fiber adapter.
   Specifically, a sensor is added in a conventional commercial fiber adapter. The sensor may be set on the outer shell of the fiber adapter or the installation base of the fiber adapter. The sensor may be a capacitor, an inductor, or a Hall element.
S202. Detect the parameter change of the sensor when a fiber is inserted to or removed from the fiber adapter and determine the connection state of the fiber according to the detection result.

When the sensor is a capacitor, step S202 includes:
detecting the change on capacitance of the capacitor when the fiber is inserted to or removed from the fiber adapter and determining the connection state of the fiber according to the change on capacitance.

When the sensor is an inductor, step S202 includes:
detecting the change on inductance of the inductor when the fiber is inserted to or removed from the fiber adapter and determining the connection state of the fiber according to the change on inductance.

When the sensor is a Hall element, the fiber surface includes a magnetic material and step S202 includes:
detecting the change on magnetic field strength of the Hall element when the fiber with a magnetic material surface is inserted to or removed from the fiber adapter, and determining the connection state of the fiber according to the change on magnetic field strength.

Accordingly, a fiber adapter in the embodiment of the present invention is configured to connect at least two fibers and includes a shell, cavities, a sensor, and a state detector. The state detector is built in the fiber adapter. The shell creates at least two cavities that are located at two relative ends of the shell. The cavities are configured to accommodate the insertion or removal of fibers. The sensor does not contact a fiber when the fiber is inserted to or removed from a cavity. The state detector is configured to detect the parameter change of the sensor when a fiber is inserted to or removed from the fiber adapter and determine the connection state of the fiber according to the detection result.

Specifically, the sensor may be set on the shell or installation base of the fiber adapter. The sensor may be a capacitor, an inductor, or a Hall element.

When the sensor is a capacitor, the state detector is configured to detect the change on capacitance of the capacitor when a fiber is inserted to or removed from the fiber adapter, and determine the connection state of the fiber according to the change on capacitance.

When the sensor is an inductor, the state detector is configured to detect the change on inductance of the inductor when a fiber is inserted to or removed from the fiber adapter, and determine the connection state of the fiber according to the change on inductance.

When the sensor is a Hall element, the cavities are configured to accommodate the insertion or removal of fibers with a magnetic material surface; and the state detector is configured to detect the change on magnetic field strength of the Hall element when a fiber is inserted to or removed from the fiber adapter, and determine the connection state of the fiber according to the change on magnetic field strength.

Accordingly, a fiber connection state detection system according to an embodiment of the present invention includes a fiber adapter and a state detector, where the state detector is located outside the fiber adapter. The fiber adapter connects at least two fibers and includes a shell, cavities, and a sensor. The shell creates at least two cavities that are located at two relative ends of the shell. The cavities are configured to accommodate the insertion or removal of fibers. The sensor does not contact a fiber when the fiber is inserted to or removed from the fiber adapter. The state detector is configured to detect the parameter change of the sensor in the fiber adapter when a fiber is inserted to or removed from the fiber adapter, and determine the connection state of the fiber according to the detection result.

The fiber connection state detection method, system, and fiber adapter provided according to the embodiment of the present invention adopt the structure of a fiber adapter in the prior art and adopt an incremental design by adding a sensor that does not contact fibers in the existing commercial fiber adapter. The implementation is easy, the reliability is high, and the environment adaptability is good, thus preventing the contact reliability issue and the environment adaptability issue caused by direct contact with the fiber. By detecting the parameter change of the sensor when a fiber is inserted to or removed from the fiber adapter and determining the connection state of the fiber according to the detection result, the embodiment of the present invention simplifies the entry of fiber connection state data into the ODN database and simplifies the installation and maintenance of the ODN, and thereby, the OPEX of the operator is reduced.

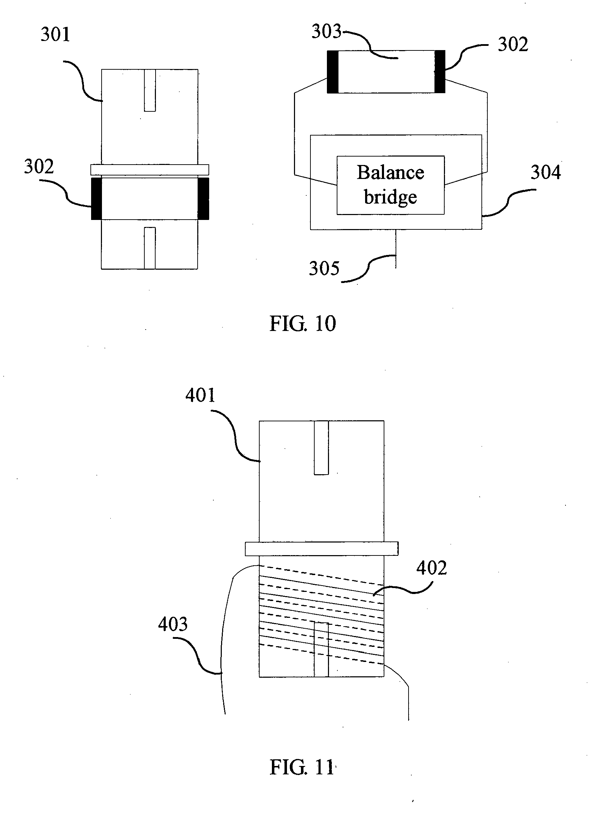

FIG. 10 illustrates a fiber adapter that integrates a capacitor according to an embodiment of the present invention. On the shell of a conventional commercial fiber adapter 301, a collar made up of two mutually insulated metal sheets 302 and an insulated supporter 303 is added. The two metal sheets form the two poles of the capacitor. The plastic shell and central cavity of the conventional fiber adapter form the electric medium of the capacitor. The state detector 304 is connected with the two metal sheets 302 and configured to detect the change on capacitance. The state detector 304 may include a balance bridge.

When no fiber is inserted to the fiber adapter, the output 305 of the state detector is adjusted to a high or low level.

Specifically, when no fiber is inserted to the fiber adapter, the state detector is adjusted to make its output "0" so as to ensure the output from the balance bridge is 0. Thus, when a fiber is inserted to the fiber adapter, the central cavity of the fiber adapter is filled with the ferrule of the fiber connector, so that the density of the electric medium of the capacitor changes, then the dielectric coefficient changes, and eventually, the capacitance changes. Then, the balance bridge in the state detector will loose balance and the state detector will detect the change and output "1". Alternatively, when no fiber is inserted to the fiber adapter, the state detector may be adjusted to make its output "1". In this case, when a fiber is inserted to the fiber adapter, the state detector will output "0". Because the capacitance is different before and after the insertion of a fiber, the output of the state detector changes, and thereby, the fiber connection state on the fiber adapter is indicated.

In addition, the two metal sheets on the collar shown in FIG. 10 may be replaced by two sticky metal papers with metal leads. The two mutually insulated metal sheets in FIG.10 may also be set on the installation base of the fiber adapter.

The state detector 304 may further include an oscillator and detect the change on capacitance through the oscillator.

Specifically, when no fiber is inserted to the fiber adapter, the state detector is adjusted to make its output "0" and the output frequency of the oscillator is f0. Thus, when a fiber is inserted to the fiber adapter, the central cavity of the fiber adapter is filled with the ferrule of the fiber connector, so that the density of the electric medium of the capacitor changes, then the dielectric coefficient changes, and eventually, the capacitance changes. Then, the output frequency of the oscillator in the state detector is f1 (f1 ≠ f0) and the state detector will detect the change and output "1". Alternatively, when no fiber is inserted to the fiber adapter, the state detector may be adjusted to make its output "1". In this case, when a fiber is inserted to the fiber adapter, the state detector will output "0". Because the capacitance is different before and after the insertion of a fiber, the output of the state detector changes, and thereby, the fiber connection state on the fiber adapter is indicated.

FIG. 11 illustrates a fiber adapter that integrates an inductor according to an embodiment of the present invention. A metal coil 402 is added on the shell of the conventional commercial fiber adapter 401 to replace the collar in FIG. 10 and form an inductor. In this case, the state detector (as shown in FIG. 10) is connected with the metal coil through a coil lead 403 and configured to detect the change on inductance. The state detector may include a balance bridge.

When no fiber is inserted to the fiber adapter, the output of the state detector is adjusted to a high or low level.

Specifically, when no fiber is inserted to the fiber adapter, the state detector is adjusted to make its output "0" so as to ensure the output from the balance bridge is 0. Thus, when a fiber is inserted to the fiber adapter, the composition of the magnetic core of the inductor changes, so that the magnetic permeability changes and eventually the inductance changes. Then, the balance bridge in the state detector will loose balance and the state detector will detect the change and output "1". Alternatively, when no fiber is inserted to the fiber adapter, the state detector may be adjusted to make its output "1". In this case, when a fiber is inserted to the fiber adapter, the state detector will output "0". Because the inductance is different before and after the insertion of a fiber, the output of the state detector changes, and thereby, the fiber connection state on the fiber adapter is indicated.

The state detector may further include an oscillator and detect the change on inductance through the oscillator.

Specifically, when no fiber is inserted to the fiber adapter, the state detector is adjusted to make its output "0" and the output frequency of the oscillator is f2. Thus, when a fiber is inserted to the fiber adapter, the central cavity of the fiber adapter is filled with the ferrule of the fiber connector, so that the density of the magnetic core of the inductor changes, then the magnetic permeability changes, and eventually, the inductance changes. Then, the output frequency of the oscillator in the state detector is f3 (f1 ≠ f0) and the state detector will detect the change and output "1". Alternatively, when no fiber is inserted to the fiber adapter, the state detector may be adjusted to make its output "1". In this case, when a fiber is inserted to the fiber adapter, the state detector will output "0". Because the inductance is different before and after the insertion of a fiber, the output of the state detector changes, and thereby, the fiber connection state on the fiber adapter is indicated.

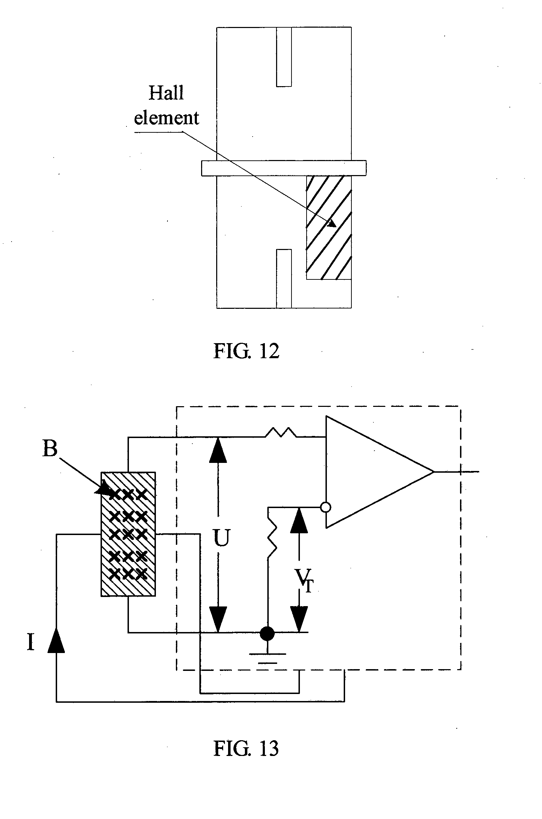

FIG. 12 illustrates a fiber adapter that integrates a Hall element according to an embodiment of the present invention. The Hall element is set on the shell of the fiber adapter to compose a magnetic fiber adapter. In this case, the state detector is configured to detect the change of magnetic field strength. The state detector may further include a voltage comparer, as shown in FIG. 13.

When a fiber with a magnetic surface approaches the fiber adapter gradually, the magnetic field strength on the Hall element of the fiber adapter changes. The voltage comparer can check whether the fiber is connected with the fiber adapter according to the direct ratio relation between the Hall voltage and the magnetic field strength.

In U = K x I x B/d, K is the Hall coefficient, I is the current intensity, B is the magnetic field strength, and d is a thickness of the Hall element. When a fiber with a magnetic surface gradually approaches the Hall element in the fiber adapter, the magnetic field strength (B) penetrating the Hall element is increasing, so that the Hall voltage (U) is also increasing. When the fiber is inserted to the fiber adapter, the magnetic material on the surface of the fiber has a shortest distance to the Hall element, and the magnetic field strength B will also reach the greatest. A high value found in practical debugging can be used as a threshold. When the voltage comparer in the state detector detects that the voltage exceeds the threshold, it indicates that the fiber is inserted to the fiber adapter. When the voltage comparer in the state detector detects that the voltage is below the threshold, it indicates that the fiber is not inserted to the fiber adapter. Because the magnetic field strength is different before and after the insertion of a fiber, the output of the state detector changes, and thereby, the fiber connection state on the fiber adapter is indicated.

In addition, the Hall element is FIG. 12 may also be set on the installation base of the fiber adapter.

In the embodiment of the present invention, a sensor is set on a conventional commercial fiber adapter and the sensor does not contact a fiber when the fiber is inserted to or removed from the fiber adapter. The implementation is easy, the reliability is high, and the environment adaptability is good. The embodiment of the present invention thereby prevents the contact reliability issue and environment adaptability issue cause by direct contact with the fiber. By detecting the parameter change of the sensor when a fiber is inserted to or removed from the fiber adapter and determining the connection state of the fiber according to the detection result, the embodiment of the present invention simplifies the entry of fiber connection state data into the ODN database and simplifies the installation and maintenance of the ODN, and thereby, the OPEX of the operator is reduced.

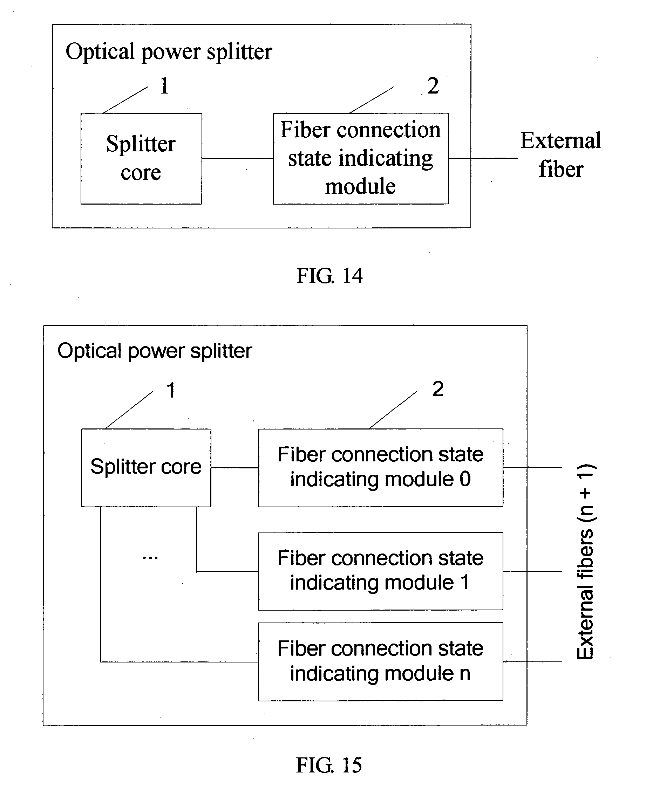

An optical power splitter according to an embodiment of the present invention may specifically be a wavelength division multiplexer/demultiplexer or a power splitter that splits optical signals. As shown in FIG. 14, the splitter includes:
a splitter core 1, configured to split an optical signal; and
fiber connection state indicating modules 2, configured to generate indications that indicate the states of connections between the splitter core 1 and external fibers. In practice, a fiber connection state indicating module is a device that includes a fiber adapter, with one end connected to one end of the splitter core (either the input end or the output end) and the other end connected to an external fiber. The fiber adapter can indicate the connection state between one external fiber and the splitter core. Normally, depending on the specifications (generally *m* × *n* , m = 1, 2, ..., where n = 2, 4, 8, 16, 32, 64, ...) of the connected splitter core, the optical power splitter includes m + n fiber connection state indicating modules. For example, FIG. 15 illustrates an *m* × *n* (m = 1) optical power splitter with the fiber connection state indicating function. The optical power splitter includes m + n (0-n, m = 1) fiber connection state indicating modules and one *m* × *n* (m = 1) splitter core.

When a fiber connector is inserted, the corresponding fiber connection state indicating module will generate a predefined signal (for example, an electric signal) and the connection state of the fiber is known according to the signal. For example, when the fiber connector is inserted, the electric circuit in the corresponding state indicating module is connected and a current signal is generated in the circuit, which indicates that the fiber is connected. For another example, when a fiber connector is inserted, the corresponding fiber connection state indicating module will output a digital signal (the high level "1" indicates that a fiber is inserted; the low level "0" indicates that no fiber is inserted). Depending on the practical need, the connection state indication may be any defined signal, either a digital signal or an analog signal, and the analog signal may be a voltage signal or a current signal.

The output line of the fiber connection state indicating module 2 may be connected to an external device directly, and the external device can make a judgment according to the output signal of the state indicating module 2 to know the fiber connection state.

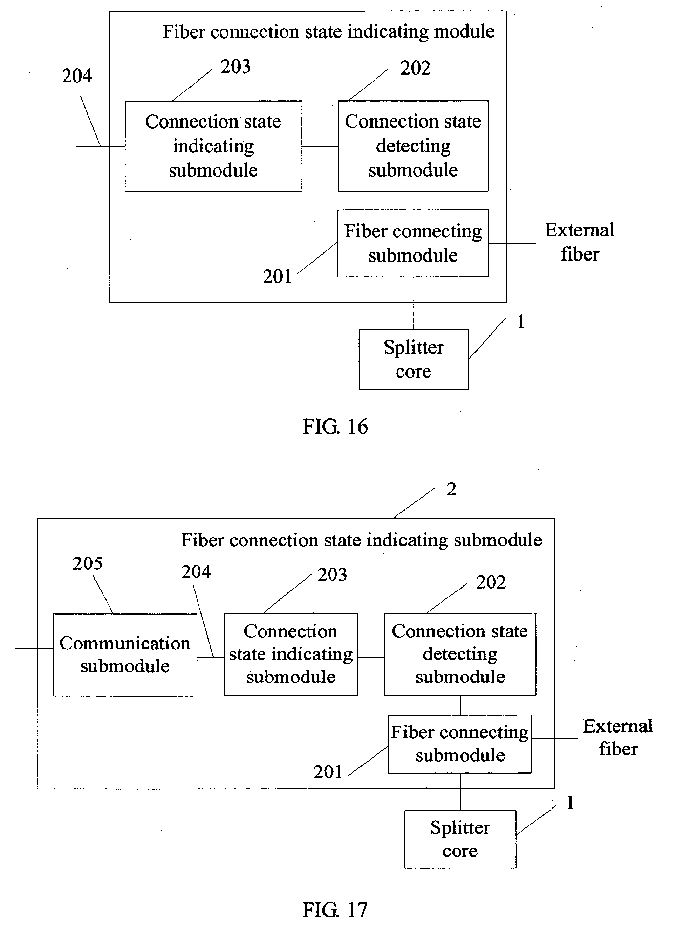

Alternatively, as shown in FIG. 16, the fiber connection state indicating module 2 may further include a fiber connecting submodule 201, a connection state detecting submodule 202, and a connection state indicating submodule 203. A fiber of the splitter core 1 is connected with an external fiber through the fiber connecting submodule 201; the connection state detecting submodule 202 detects the connection state between the fiber of the splitter core 1 and the external fiber and reports the detection result to the connection state indicating submodule 203; and the connection state indicating submodule 203 generates a state indication signal 204 according to the detection result. The state indication signal 204 may be inputted to an external device directly so that the external device knows the fiber connection state of the optical power splitter.

In addition, as shown in FIG. 17, the state indicating module 2 may further include a communication submodule 205. The communication submodule 205 is configured to communicate with the corresponding external device. Specifically, the communication submodule 205 reports the fiber connection state indication information (for example, a detection result) stored in the communication submodule or processed connection state indication information (for example, a state indication signal) to the network management center or on-site maintenance device of the ODN.

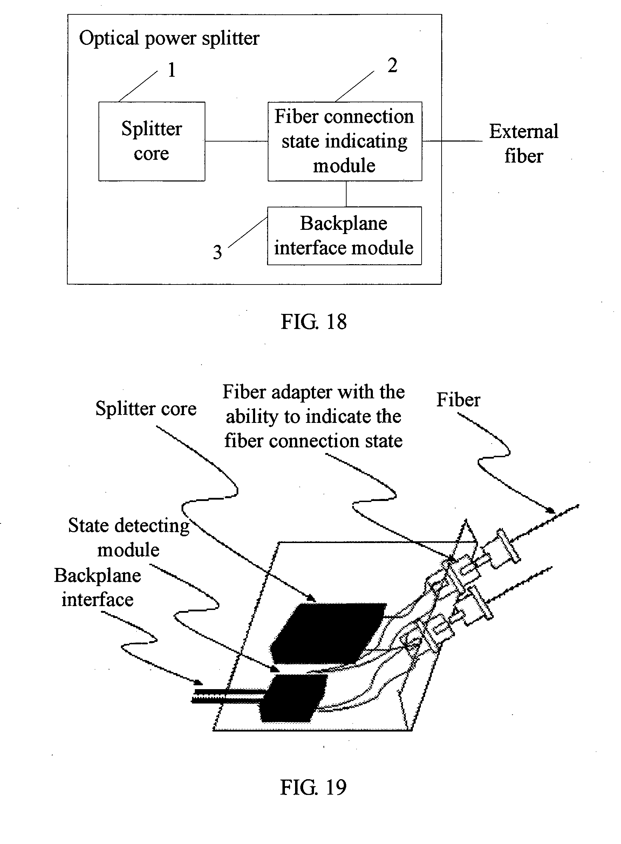

The output line of the fiber connection state indicating module 2 may be directly connected with the external device, or as shown in FIG. 18, connected to the external device through a backplane interface module 3. For example, the fiber connection state indicating module obtains power or an external command and sends the fiber connection state data to the external device through the backplane interface according to the external command.

FIG. 19 illustrates the connection between the optical power splitter shown in FIG. 18 and external fibers. The fiber connection state indicating module 2 shown in FIG. 15 is specifically a fiber adapter with the ability to indicate the fiber connection state.

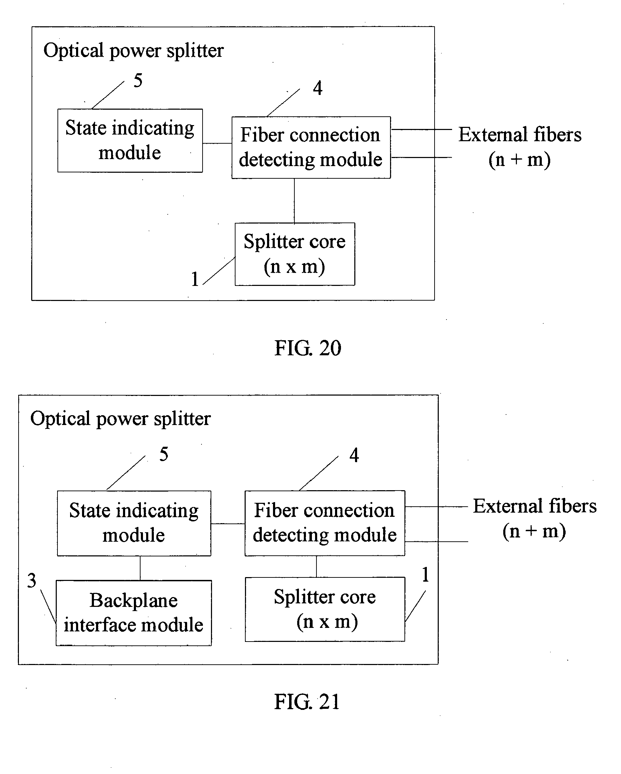

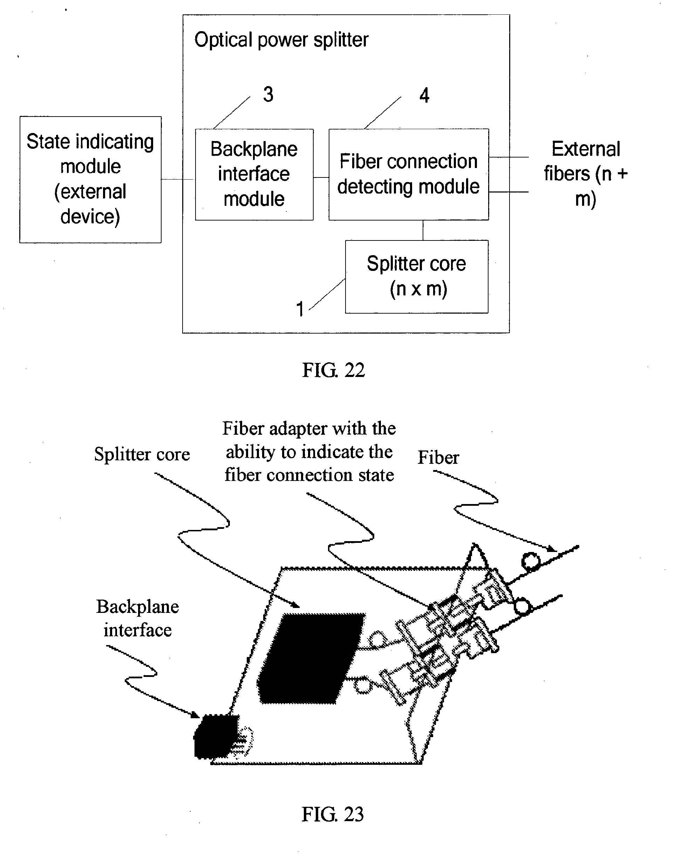

In the case of an *m* × *n* (n = 1, 2, ...; m = 2, 4, 8, 16, 32, 64, ...) splitter, as shown in FIG. 20, the optical power splitter in the embodiment of the present invention can integrate the fiber connecting submodules 201 and connection state detecting submodules 202 of n + m fiber connection state indicating modules 2 into a fiber connection detecting module 4, and integrate the remaining n + m fiber connection state indicating submodules 203 into a state indicating module 5. The state indicating module 5 may be connected with an external device directly, or include a communication submodule 205 and communicate with the ODN network management center through the communication submodule 205. Or, the state indicating module 5 obtains power or external commands through the backplane interface module 3 and reports the fiber connection state information stored in the fiber connection state indicating module to the external device, as shown in FIG. 21. In practice, the state indicating module 5 may be set outside the optical power splitter. This means the fiber connection detecting module 4 is connected to the state indicating module of an external device through the backplane interface module 3, as shown in FIG. 22. The backplane interface module 3 implements the convergence of state signals in addition to the obtaining of external power.

FIG. 23 illustrates the connection between the optical power splitter shown in FIG. 16 and fibers. The connection state indicating module 2 shown in FIG. 20 is specifically a fiber adapter with the ability to indicate the fiber connection state.

From the preceding description, it is known that, in the optical power splitter provided in the embodiment of the present invention, because a state indicating module that is able to generate indication information of the connection state between a splitter core and fibers, the fiber connection management on an ocean of optical branching components is simplified. With a communication submodule, the optical power splitter can report the fiber connection state information obtained through automatic detection to the network management center, so that the OPEX is reduced.

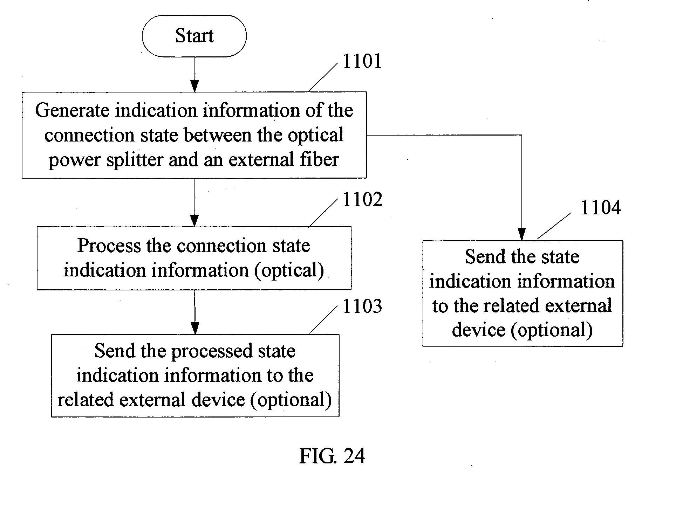

Accordingly, an embodiment of the present invention provides a method for obtaining a fiber connection state, as shown in FIG. 24. The method is applicable to an optical power splitter that includes a splitter core. The splitter core is configured to split an optical signal and provide a terminal for connecting with an external fiber. The method includes the following steps:
1101. The fiber connection state on the connection terminal is detected and indication information of the connection state between the optical power splitter and external fibers is generated according to the detected fiber connection state. The connection state of related fibers can be known according to the connection state information.
   For example, when a fiber connector is inserted, the corresponding circuit is connected and a current signal is generated in the circuit, which indicates that the fiber is connected. For another example, when the fiber connector is inserted, a digital signal (the high level "1" indicates that a fiber is inserted; the low level "0" indicates that no fiber is inserted) is generated. Depending on the practical need, the connection state indication may be any defined signal, either a digital signal or an analog signal, and the analog signal may be a voltage signal or a current signal.
1102. The connection state indication information is processed. This step is optional.
   Specifically, a state indication signal is generated according to the connection state indication information. For example, when the connection state indication is a current signal, the current signal is processed to generate a corresponding digital signal.
   The processing further includes interface processing that will not be described here.
1103. The processed connection state indication is sent to the related external device if step 1102 is executed. This step is optional.
1104. The connection state indication obtained in step 1101 is sent to the related external device. This step is optional.

For example, the fiber connection state indication information (for example, a detection result) or the processed connection state indication information (for example, a state indication signal) is reported to the network management center or on-site maintenance device of the ODN.

From the preceding description, it is known that, the method for obtaining fiber connection state information in the embodiment of the present invention can automatically generate indication information of the connection state between the splitter core and a fiber and thereby simplifies the fiber connection management on an ocean of optical branching components. With the method, fiber connection state information can be entered automatically and therefore the OPEX is reduced.

The apparatuses are described through exemplary embodiments. The units described as separated parts may be physically separated or physically not separated. The parts illustrated as units may or may not be physical units. That is, such parts may be located in one location or distributed in multiple network units. The purpose of the technical solution of the embodiments of the present invention can be achieved through part or all of the modules described herein depending on the practical needs. Those skilled in the art will understand and implement the technical solution of the present invention without any creative effort.

Through the descriptions of the preceding embodiments, those skilled in the art may understand that the present invention may be implemented by using hardware only or by using software and a necessary universal hardware platform. Based on such understanding, the essence of the technical solution or the novelty over the prior art, can be reflected in the form of a software product. The software product may be stored in a computer readable storage medium, such as a read only memory (ROM), a random access memory (RAM), a magnetic disk, or a compact disk-read only memory (CD-ROM) and include a number of instructions that enable a computer device (personal computer, server, or network device) to execute the methods according to the embodiments or certain portions of the embodiments.

The present invention is not limited to these embodiments.

## Claims

1. An optical element module (220a, 220a'), comprising at least one passive optical element, at least one fiber adapter (222a,..., 222n, 222a',...,222n', 201, 401, 1#, ..., n#), a power interface, and a state detecting unit, wherein:
the passive optical element is configured to distribute and/or process an optical signal that can proceed even without power supply;
the fiber adapter (222a, ..., 222n, 222a', ..., 222n', 201, 401, 1#, ..., n#) is configured to connect to a fiber connector and provide a fiber port to couple a fiber;
the power interface (242) is connected to a power cable or a power bus (230, 430) and configured to provide power from the power cable or power bus to the state detecting unit; and
the state detecting unit (202, 304), if powered, is configured to respond to a connection state change of the fiber in the fiber adapter and output a state indication that indicates the state of the fiber port;
wherein the state detecting unit (202, 304) comprises a sensor (224a, ..., 224n) and a state indicating unit, wherein:
the sensor (224a, ..., 224n) is coupled to the power bus and set on a shell or installation base of the optical adapter, and if power is supplied, a parameter of the sensor has a specific relation to changes of the connection state of the fiber in the fiber adapter; and
the state indicating unit is coupled to the sensor (224a, ..., 224n), and configured to detect a change of the parameter of the sensor and output the state indication that indicates the state of the fiber port.

2. The optical element module of claim 1, wherein the passive optical element may be any one or any combination of: optical power splitter, distribution fiber, passive optical filter, optical switch, optical isolator, optical attenuator, optical delayer, and optical wavelength demultiplexer.

3. The optical element module of claim 1, further comprising a radio frequency identification, RFID, tag attached to the fiber adapter, wherein the RFID tag attached to the fiber adapter corresponds to the fiber coupled to the fiber adapter.

4. The optical element module of claim 1, further comprising a signal bus interface connecting a signal bus, wherein:
the state detecting unit is configured to output the state indication that indicates the state of the fiber port through the signal bus interface.

5. An optical node (200, 200b, 200a, 200d, 300, 300a, 300b, 300d, 400, 400a, 500, 500b), comprising:
at least two optical element modules (220a, 220a') of any one of claims 1-4; and
an external power interface (242), configured to receive external power and supply the power to the state detecting units (202, 304) of the optical element modules through the power interfaces of the optical element modules.

6. The optical node of claim 5, further comprising a power processing module that is coupled between the external power interface and the power interfaces of the optical element modules, wherein:
the power processing module is configured to process the power from the external interface and provide the power to the state detecting units of the optical element modules through the power interfaces of the optical element modules.

7. The optical node of claim 5, further comprising an operation control module and one or more of these modules: state collecting module, radio frequency identification, RFID, reading and identifying module, storing module, and communication module, wherein the operation control module is configured to control one or more of the state collecting module, RFID reading and identifying module, storing module, and communication module, wherein operation control module is configured to control by being configured to: collect connection states of fibers, control RFID reading and identifying operations, map fiber connection states to RFID tags of the fibers, generate fiber connection state alarms, store information related to the fiber connection states, and report the information related to the fiber connection states, wherein:
the state collecting module is configured to collect the connection states of fibers;
the RFID reading and identifying module is configured to read and identify RFID tags;
the storing module is configured to store the information related to the connection states of fibers; and
the communication module is configured to report the information related to the connection states of fibers.

8. The optical node of claim 7, comprising a board, wherein the external power interface (242) and the operation control module (462), and one or more of the state collecting module, RFID reading and identifying module, storing module, and communication module are set on the board.

9. The optical node of claim 7, comprising multiple boards, wherein one or more of the external power interface (242), operation control module (462), state collecting module, RFID reading and identifying module, storing module, and communication module are set on the boards respectively.

10. An optical distribution system, comprising at least one cabinet, wherein each cabinet contains:
at least two optical element modules of any one of claims 1-4;
one or more boards, at least one of which comprises an external power interface (242); and
a power bus (230, 430) is configured to connect the optical element modules (220a, 220a') and the board that comprises the external power interface, and feed power to the optical element modules.

11. A fiber connection state management method, used for managing the optical element module of any one of claims 1-4, and if the optical element module is powered, comprising:
setting a sensor (224a, ..., 224n) in a fiber adapter (222a,..., 222n, 222a',...,222n', 201, 401, 1#, ..., n#) and if power is supplied, a parameter of the sensor has a specific relation to changes of the connection state of the fiber in the fiber adapter (222a,..., 222n, 222a',...,222n', 201, 401, 1#, ..., n#);
detecting a parameter change of the parameter of the sensor and outputting the state indication that indicates the state of the fiber port;
collecting the state indication that indicates the state of a fiber port;
reading and identifying an identification, ID, of a fiber connected to a fiber adapter of the optical element module; and
managing fiber connection state according to the state indication that is outputted by the optical element module and indicates the state of the fiber port and the ID of the fiber.

12. The method of claim 11, wherein the step of managing fiber connection state comprises at least one of the following operations:
mapping the fiber to the fiber port of the fiber adapter to generate mapping information comprising the ID of the fiber and the ID of the fiber port, and sending the mapping information to a network management center;
sending a new connection state of the fiber to the network management center when the connection state of the fiber changes; and
mapping the ID of the fiber to the connection state of the fiber and checking for errors according to the mapped fiber ID and fiber connection state.

13. The method of claim 11, wherein:
the sensor (224a, ..., 224n) is a capacitor, and the step of detecting the parameter change of the sensor and determining the connection state of the fiber according to the detection result comprises detecting a change of capacitance of the capacitor when the fiber is inserted to or removed from the fiber adapter and determining the connection state of the fiber according to the change of capacitance; or
the sensor (224a, ..., 224n) is an inductor, and the step of detecting the parameter change of the sensor and determining the connection state of the fiber according to the detection result comprises detecting a change of inductance of the inductor when the fiber is inserted to or removed from the fiber adapter and determining the connection state of the fiber according to the change of inductance; or
the sensor (224a, ..., 224n) is a Hall element, and the step of detecting the parameter change of the sensor and determining the connection state of the fiber according to the detection result comprises detecting a change of magnetic field strength of the Hall element when the fiber is inserted to or removed from the fiber adapter and determining the connection state of the fiber according to the change of magnetic field strength.

14. The optical element module of claim 1, the fiber adapter (222a, ..., 222n, 222a', ..., 222n', 201, 401, 1#, ..., n#), configured to connect at least two fibers, comprising:
a shell (101), configured to create at least two cavities that are located at two relative ends of the shell;
the cavities (102), configured to accommodate insertion or removal of fibers;
a sensor (224a, ..., 224n), which does not contact a fiber when the fiber is inserted to or removed from one of the cavities; and
a state detector (324), configured to detect a parameter change of the sensor when a fiber is inserted to or removed from the fiber adapter and determine the connection state of the fiber according to the detection result.

## Patentansprüche

1. Modul optischer Elemente (220a, 220a'), das mindestens ein passives optisches Element, mindestens einen Lichtwellenleiteradapter (222a, ..., 222n, 222a', ..., 222n', 201, 401, 1#, ..., n#), eine Stromversorgungsschnittstelle und eine Zustandserkennungseinheit umfasst, wobei:
das passive optische Element konfiguriert ist, ein optisches Signal, das sich auch ohne Stromversorgung ausbreiten kann, zu verteilen und/oder zu verarbeiten;
der Lichtwellenleiteradapter (222a, ..., 222n, 222a', ..., 222n', 201, 401, 1#, ..., n#) konfiguriert ist, an ein Lichtwellenleiterverbindungselement angeschlossen zu werden und einen Lichtwellenleiteranschluss bereitzustellen, mit dem ein Lichtwellenleiter verbunden wird;
die Stromversorgungsschnittstelle (242) an ein Stromversorgungskabel oder einen Stromversorgungsbus (230, 430) angeschlossen ist und konfiguriert ist, eine Stromversorgung von dem Stromversorgungskabel oder dem Stromversorgungsbus für die Zustandserkennungseinheit bereitzustellen; und
die Zustandserkennungseinheit (202, 304) so konfiguriert ist, dass sie, wenn sie mit Strom versorgt wird, auf eine Änderung des Verbindungszustands des Lichtwellenleiters in dem Lichtwellenleiteradapter reagiert und eine Zustandsanzeige ausgibt, die den Zustand des Lichtwellenleiteranschlusses anzeigt;
wobei die Zustandserkennungseinheit (202, 304) einen Sensor (224a, ..., 224n) und eine Zustandsanzeigeeinheit umfasst, wobei:
der Sensor (224a, ..., 224n) mit dem Stromversorgungsbus verbunden ist und auf einer Hülle oder einer Einbauträgerplatte des optischen Adapters angeordnet ist, und ein Parameter des Sensors einen spezifischen Bezug zu Änderungen des Verbindungszustands des Lichtwellenleiters in dem Lichtwellenleiteradapter hat, wenn eine Stromversorgung geliefert wird; und
die Zustandsanzeigeeinheit mit dem Sensor (224a, ..., 224n) verbunden ist und konfiguriert ist, eine Änderung des Parameters des Sensors zu erkennen und die Zustandsanzeige auszugeben, die den Zustand des Lichtwellenleiteranschlusses anzeigt.

2. Modul optischer Elemente nach Anspruch 1, wobei das passive optische Element ein beliebiges Element oder eine Kombination aus einem optischen Leistungsteiler, einem Verteilungslichtwellenleiter, einem passiven optischen Filter, einem optischen Schalter, einem optischen Isolationselement, einem optischen Dämpfungselement, einem optischen Verzögerungselement und einem optischen Wellenlängen-Demultiplexer sein kann.

3. Modul optischer Elemente nach Anspruch 1, das außerdem eine Radiofrequenz-Identifikationsmarkierung ("Radio Frequency Identification Tag", RFID-Markierung) umfasst, die an den Lichtwellenleiteradapter gekoppelt ist, wobei die an den Lichtwellenleiteradapter gekoppelte RFID-Markierung dem Lichtwellenleiter entspricht, der mit dem Lichtwellenleiteradapter verbunden ist.

4. Modul optischer Elemente nach Anspruch 1, das außerdem eine Signalbusschnittstelle umfasst, die mit einem Signalbus verbunden ist, wobei:
die Zustandserkennungseinheit konfiguriert ist, die Zustandsanzeige auszugeben, die den Zustand des Lichtwellenleiteranschlusses über die Signalbusschnittstelle anzeigt.

5. Optischer Knoten (200, 200b, 200a, 200d, 300, 300a, 300b, 300d, 400, 400a, 500, 500b), umfassend:
mindestens zwei Module optischer Elemente (220a, 220a') nach einem der Ansprüche 1 bis 4 und
eine externe Spannungsversorgungsschnittstelle (242), die konfiguriert ist, eine externe Stromversorgung zu empfangen und die Zustandserkennungseinheiten (202, 304) der Module optischer Elemente über die Stromversorgungsschnittstellen der Module optischer Elemente mit Strom zu versorgen.

6. Optischer Knoten nach Anspruch 5, der außerdem ein Verarbeitungsmodul der Stromversorgung umfasst, das zwischen die externe Stromversorgungsschnittstelle und die Stromversorgungsschnittstellen der Module optischer Elemente eingebunden ist, wobei:
das Verarbeitungsmodul der Stromversorgung konfiguriert ist, die Stromversorgung von der externen Schnittstelle zu verarbeiten und die Stromversorgung für die Zustandserkennungseinheiten der Module optischer Elemente über die Stromversorgungsschnittstellen der Module optischer Elemente bereitzustellen.

7. Optischer Knoten nach Anspruch 5, der außerdem ein Betriebssteuermodul und eines oder mehrere der folgenden Module umfasst: ein Zustandserfassungsmodul, ein Lese- und Identifikationsmodul für die Radiofrequenz-Identifikation (RFID-Lese- und Identifikationsmodul), ein Speichermodul und ein Datenaustauschmodul, wobei das Betriebssteuermodul konfiguriert ist, eines oder mehrere des Zustandserfassungsmoduls, des RFID-Lese- und Identifikationsmoduls, des Speichermoduls und des Datenaustauschmoduls zu steuern, wobei das Betriebssteuermodul so konfiguriert ist, dass es durch eine entsprechende Konfiguration Folgendes steuert: ein Erfassen der Verbindungszustände der Lichtwellenleiter, ein Steuern des RFID-Lese- und Identifikationsbetriebs, ein Abbilden der Verbindungszustände der Lichtwellenleiter auf die RFID-Markierungen der Lichtwellenleiter, ein Erzeugen von Alarmen für die Verbindungszustände der Lichtwellenleiter, ein Speichern der Informationen in Bezug auf die Verbindungszustände der Lichtwellenleiter und ein Berichten der Informationen in Bezug auf die Verbindungszustände der Lichtwellenleiter, wobei:
das Zustandserfassungsmodul konfiguriert ist, die Verbindungszustände der Lichtwellenleiter zu erfassen;
das RFID-Lese- und Identifikationsmodul konfiguriert ist, die RFID-Markierungen zu lesen und zu identifizieren;
das Speichermodul konfiguriert ist, die Informationen in Bezug auf die Verbindungszustände der Lichtwellenleiter zu speichern; und
das Datenaustauschmodul konfiguriert ist, die Informationen in Bezug auf die Verbindungszustände der Lichtwellenleiter zu berichten.

8. Optischer Knoten nach Anspruch 7, der eine Platine umfasst, wobei die externe Stromversorgungsschnittstelle (242) und das Betriebssteuermodul (462) und eines oder mehrere des Zustandserfassungsmoduls, des RFID-Lese- und Identifikationsmoduls, des Speichermoduls und des Datenaustauschmoduls auf der Platine angeordnet sind.

9. Optischer Knoten nach Anspruch 7, der mehrere Platinen umfasst, wobei eine oder mehrere der externen Stromversorgungsschnittstellen (242), das Betriebssteuermodul (462), das Zustandserfassungsmodul, das RFID-Lese- und Identifikationsmodul, das Speichermodul und das Datenaustauschmodul jeweils auf den Platinen angeordnet sind.

10. Optisches Verteilungssystem, das mindestens ein Gehäuse umfasst, wobei jedes Gehäuse enthält:
mindestens zwei Module optischer Elemente nach einem der Ansprüche 1 bis 4;
eine oder mehrere Platinen, wobei mindestens eine davon eine externe Stromversorgungsschnittstelle (242) umfasst; und
einen Stromversorgungsbus (230, 430), der konfiguriert ist, die Module optischer Elemente (220a, 220a') und die Platine, welche die externe Stromversorgungsschnittstelle umfasst, miteinander zu verbinden und die Module optischer Elemente mit Strom zu versorgen.

11. Verfahren zum Verwalten eines Verbindungszustands eines Lichtwellenleiters, das verwendet wird, um ein Modul optischer Elemente nach einem der Ansprüche 1 bis 4 zu verwalten, und das, wenn das Modul optischer Elemente mit Strom versorgt wird, umfasst:
Anordnen eines Sensors (224a, ..., 224n) in einem Lichtwellenleiteradapter (222a, ..., 222n, 222a', ..., 222n', 201, 401, 1#, ..., n#) und wobei ein Parameter des Sensors einen spezifischen Bezug zu den Änderungen des Verbindungszustands des Lichtwellenleiters in dem Lichtwellenleiteradapter (222a, ..., 222n, 222a', ..., 222n', 201, 401, 1#, ..., n#) aufweist, wenn eine Stromversorgung geliefert wird;
Erkennen einer Parameteränderung des Parameters des Sensors und Ausgeben der Zustandsanzeige, die den Zustand des Lichtwellenleiteranschlusses anzeigt;
Erfassen der Zustandsanzeige, die den Zustand eines Lichtwellenleiteranschlusses anzeigt;
Lesen und Identifizieren einer Identifikation, ID, eines Lichtwellenleiters, der an einen Lichtwellenleiteradapter des Moduls optischer Elemente angeschlossen ist; und
Verwalten des Verbindungszustands des Lichtwellenleiters gemäß der Zustandsanzeige, die von dem Modul optischer Elemente ausgegeben wird und die den Zustand des Lichtwellenleiteranschlusses und die ID des Lichtwellenleiters anzeigt.

12. Verfahren nach Anspruch 11, wobei der Schritt des Verwaltens des Verbindungszustands eines Lichtwellenleiters mindestens eine der folgenden Funktionen umfasst:
Abbilden des Lichtwellenleiters an den Lichtwellenleiteranschluss des Lichtwellenleiteradapters, um eine Abbildung von Informationen zu erzeugen, welche die ID des Lichtwellenleiters und die ID des Lichtwellenleiteranschlusses umfassen, und Senden der Abbildungsinformationen an eine Netzwerkverwaltungszentrale;
Senden eines neuen Verbindungszustands des Lichtwellenleiters an die Netzwerkverwaltungszentrale, wenn sich der Verbindungszustand des Lichtwellenleiters ändert; und
Abbilden der ID des Lichtwellenleiters an den Verbindungszustand des Lichtwellenleiters und Prüfen auf Fehler gemäß der abgebildeten Lichtwellenleiter-ID und gemäß dem Verbindungszustand des Lichtwellenleiters.

13. Verfahren nach Anspruch 11, wobei:
der Sensor (224a, ..., 224n) ein Kondensator ist, und wobei der Schritt des Erkennens der Parameteränderung des Sensors und des Ermittelns des Verbindungszustands des Lichtwellenleiters gemäß dem Ergebnis des Erkennens umfasst: Erkennen einer Kapazitätsänderung des Kondensators, wenn der Lichtwellenleiter in den Lichtwellenleiteradapter eingefügt wird oder aus dem Lichtwellenleiteradapter entfernt wird, und Ermitteln des Verbindungszustands des Lichtwellenleiters gemäß der Kapazitätsänderung; oder
der Sensor (224a, ..., 224n) eine Induktivität ist, und wobei der Schritt des Erkennens der Parameteränderung des Sensors und des Ermittelns des Verbindungszustands des Lichtwellenleiters gemäß dem Ergebnis des Erkennens umfasst: Erkennen einer Änderung des induktiven Widerstands der Induktivität, wenn der Lichtwellenleiter in den Lichtwellenleiteradapter eingefügt wird oder aus dem Lichtwellenleiteradapter entfernt wird, und Ermitteln des Verbindungszustands des Lichtwellenleiters gemäß der Änderung des induktiven Widerstands; oder
der Sensor (224a, ..., 224n) ein Hall-Element ist, und wobei der Schritt des Erkennens der Parameteränderung des Sensors und des Ermittelns des Verbindungszustands des Lichtwellenleiters gemäß dem Ergebnis des Erkennens umfasst: Erkennen einer Änderung der magnetischen Feldstärke des Hall-Elements, wenn der Lichtwellenleiter in den Lichtwellenleiteradapter eingefügt wird oder aus dem Lichtwellenleiteradapter entfernt wird, und Ermitteln des Verbindungszustands des Lichtwellenleiters gemäß der Änderung der magnetischen Feldstärke.

14. Modul optischer Elemente nach Anspruch 1, wobei der Lichtwellenleiter (222a, ..., 222n, 222a', ..., 222n', 201, 401, 1#, ..., n#) konfiguriert ist, mindestens zwei Lichtwellenleiter zu verbinden, wobei das Modul umfasst:
eine Hülle (101), die konfiguriert ist, mindestens zwei Hohlräume zu erzeugen, die an zwei relativen Enden der Hülle angebracht sind;
die Hohlräume (102), die konfiguriert sind, dem Einfügen oder Entfernen der Lichtwellenleiter Platz zu bieten;
ein Sensor (224a, ..., 224n), der nicht mit einem Lichtwellenleiter in Kontakt steht, wenn der Lichtwellenleiter in einen der Hohlräume eingefügt wird oder daraus entfernt wird; und
ein Zustandsdetektor (324), der konfiguriert ist, eine Parameteränderung des Sensors zu erkennen, wenn ein Lichtwellenleiter in den Lichtwellenleiteradapter eingefügt wird oder daraus entfernt wird, und den Verbindungszustand des Lichtwellenleiters gemäß dem Ergebnis des Erkennens zu ermitteln.

## Revendications

1. Module d'élément optique (220a, 220a'), comprenant au moins un élément optique passif, au moins un adaptateur de fibre (222a, ..., 222n, 222a', ..., 222n', 201, 401, 1#, ..., n#), une interface d'alimentation et une unité de détection d'état, dans lequel :
l'élément optique passif est configuré pour distribuer et/ou traiter un signal optique, cela pouvant s'effectuer même sans alimentation électrique ;
l'adaptateur de fibre (222a, ..., 222n, 222a', ..., 222n', 201, 401, 1#, ..., n#) est configuré pour se connecter à un connecteur de fibre et fournir un port de fibre pour raccorder une fibre ;
l'interface d'alimentation (242) est connectée à un câble d'alimentation ou à un bus d'alimentation (230, 430) et est configurée pour fournir une alimentation du câble d'alimentation ou du bus d'alimentation à l'unité de détection d'état ; et
l'unité de détection d'état (202, 304), si elle est alimentée, est configurée pour répondre à un changement d'état de connexion de la fibre dans l'adaptateur de fibre et fournir en sortie une indication d'état qui indique l'état du port de fibre ;
dans lequel l'unité de détection d'état (202, 304) comprend un capteur (224a, ..., 224n) et une unité d'indication d'état, dans lequel :
le capteur (224a,..., 224n) est raccordé au bus d'alimentation et est positionné sur une base d'enveloppe ou d'installation de l'adaptateur optique, et si une alimentation est délivrée, un paramètre du capteur présente une relation spécifique vis-à-vis de changements de l'état de connexion de la fibre dans l'adaptateur de fibre ; et
l'unité d'indication d'état est raccordée au capteur (224a,..., 224n) et est configurée pour détecter une modification du paramètre du capteur et fournir en sortie l'indication d'état qui indique l'état du port de fibre.

2. Module d'élément optique selon la revendication 1, dans lequel l'élément optique passif peut être l'un quelconque ou une combinaison quelconque : d'un séparateur de puissance optique, d'une fibre de distribution, d'un filtre optique passif, d'un commutateur optique, d'un isolateur optique, d'un atténuateur optique, d'un retardateur optique, et d'un démultiplexeur de longueur d'onde optique.

3. Module d'élément optique selon la revendication 1, comprenant en outre une étiquette d'identification radiofréquence, RFID, fixée à l'adaptateur de fibre, l'étiquette RFID fixée à l'adaptateur de fibre correspondant à la fibre raccordée à l'adaptateur de fibre.

4. Module d'élément optique selon la revendication 1, comprenant en outre une interface de bus de signal se connectant à un bus de signal, dans lequel :
l'unité de détection d'état est configurée pour fournir en sortie l'indication d'état qui indique l'état du port de fibre par l'intermédiaire de l'interface de bus de signal.

5. Noeud optique (200, 200b, 200a, 200d, 300, 300a, 300b, 300d, 400, 400a, 500, 500b), comprenant :
au moins deux modules d'éléments optiques (220a, 220a') selon l'une quelconque des revendications 1 à 4 ; et
une interface d'alimentation externe (242), configurée pour recevoir une alimentation externe et délivrer l'alimentation aux unités de détection d'état (202, 304) des modules d'éléments optiques par l'intermédiaire des interfaces d'alimentation des modules d'éléments optiques.

6. Noeud optique selon la revendication 5, comprenant en outre un module de traitement d'alimentation qui est raccordé entre l'interface d'alimentation externe et les interfaces d'alimentation des modules d'éléments optiques, dans lequel :
le module de traitement d'alimentation est configuré pour traiter l'alimentation provenant de l'interface externe et fournir l'alimentation aux unités de détection d'état des modules d'éléments optiques par l'intermédiaire des interfaces d'alimentation des modules d'éléments optiques.

7. Noeud optique selon la revendication 5, comprenant en outre un module de commande d'exploitation et un ou plusieurs des modules suivants : un module de collecte d'état, un module de lecture et d'identification RFID, identification radiofréquence, un module de stockage et un module de communication, dans lequel le module de commande d'exploitation est configuré pour commander un ou plusieurs du module de collecte d'état, du module de lecture et d'identification RFID, du module de stockage et du module de communication, dans lequel le module de commande d'exploitation est configuré pour effectuer une commande en étant configuré pour : collecter des états de connexion de fibres, commander des opérations de lecture et d'identification RFID, mettre en correspondance des états de connexion de fibres avec des étiquettes RFID des fibres, générer des alarmes d'états de connexion de fibres, stocker des informations concernant les états de connexion de fibres, et signaler les informations concernant les états de connexion de fibres, dans lequel :
le module de collecte d'état est configuré pour collecter les états de connexion de fibres ;
le module de lecture et d'identification RFID est configuré pour lire et identifier des étiquettes RFID ;
le module de stockage est configuré pour stocker les informations concernant les états de connexion de fibres ; et
le module de communication est configuré pour signaler les informations concernant les états de connexion de fibres.

8. Noeud optique selon la revendication 7, comprenant une carte, dans lequel l'interface d'alimentation externe (242) et le module de commande d'exploitation (462), et un ou plusieurs du module de collecte d'état, du module de lecture et d'identification RFID, du module de stockage et du module de communication, sont positionnés sur la carte.

9. Noeud optique selon la revendication 7, comprenant de multiples cartes, dans lequel un ou plusieurs de l'interface d'alimentation externe (242), du module de commande d'exploitation (462), du module de collecte d'état, du module de lecture et d'identification RFID, du module de stockage et du module de communication, sont respectivement positionnés sur les cartes.

10. Système de distribution optique, comprenant au moins une armoire, dans lequel chaque armoire contient :
au moins deux modules d'éléments optiques selon l'une quelconque des revendications 1 à 4 ;
une ou plusieurs cartes, dont au moins l'une comprend une interface d'alimentation externe (242) ; et
un bus d'alimentation (230, 430) est configuré pour connecter les modules d'éléments optiques (220a, 220a') et la carte qui comprend l'interface d'alimentation externe, et alimenter en courant les modules d'éléments optiques.

11. Procédé de gestion d'état de connexion de fibres, utilisé pour gérer le module d'élément optique selon l'une quelconque des revendications 1 à 4 et, si le module d'élément optique est alimenté, comprenant :
le positionnement d'un capteur (224a, ..., 224n) dans un adaptateur de fibre (222a, ..., 222n, 222a', ..., 222n', 201, 401, 1#, ..., n#) et, si une alimentation est délivrée, un paramètre du capteur présente une relation spécifique vis-à-vis de changements de l'état de connexion de la fibre dans l'adaptateur de fibre (222a, ..., 222n, 222a', ..., 222n', 201, 401, 1#, ..., n#) ;
la détection d'un changement de paramètre du paramètre du capteur et la fourniture en sortie de l'indication d'état qui indique l'état du port de fibre ;
la collecte de l'indication d'état qui indique l'état d'un port de fibre ;
la lecture et l'identification d'une identification, ID, d'une fibre connectée à un adaptateur de fibre du module d'élément optique ; et
la gestion d'un état de connexion de fibre, conformément à l'indication d'état qui est fournie en sortie par le module d'élément optique et indique l'état du port de fibre et l'ID de la fibre.

12. Procédé selon la revendication 11, dans lequel l'étape de gestion de l'état de connexion de fibre comprend au moins l'une des opérations suivantes :
la mise en correspondance de la fibre avec le port de fibre de l'adaptateur de fibre afin de générer des informations de mise en correspondance comprenant l'ID de la fibre et l'ID du port de fibre, et l'envoi des informations de mise en correspondance à un centre de gestion de réseau ;
l'envoi d'un nouvel état de connexion de la fibre au centre de gestion de réseau lorsque l'état de connexion de la fibre change ; et
la mise en correspondance de l'ID de la fibre avec l'état de connexion de la fibre et la vérification de la présence d'erreurs conformément à l'ID de fibre et à l'état de connexion de fibre mis en correspondance.

13. Procédé selon la revendication 11, dans lequel :
le capteur (224a, ..., 224n) est un condensateur, et l'étape de détection du changement de paramètre du capteur et de détermination de l'état de connexion de la fibre conformément au résultat de détection comprend la détection d'un changement de capacité du condensateur lorsque la fibre est insérée dans l'adaptateur de fibre ou en est retirée et la détermination de l'état de connexion de la fibre conformément au changement de capacité ; ou
le capteur (224a, ..., 224n) est une inductance, et l'étape de détection du changement de paramètre du capteur et de détermination de l'état de connexion de la fibre conformément au résultat de détection comprend la détection d'un changement d'inductance de l'inductance lorsque la fibre est insérée dans l'adaptateur de fibre ou en est retirée et la détermination de l'état de connexion de la fibre conformément au changement d'inductance ; ou
le capteur (224a, ..., 224n) est un élément à effet Hall, et l'étape de détection du changement de paramètre du capteur et de détermination de l'état de connexion de la fibre conformément au résultat de détection comprend la détection d'un changement d'intensité du champ magnétique de l'élément à effet Hall lorsque la fibre est insérée dans l'adaptateur de fibre ou en est retirée et la détermination de l'état de connexion de la fibre conformément au changement d'intensité du champ magnétique.

14. Module d'élément optique selon la revendication 1, l'adaptateur de fibre (222a, ..., 222n, 222a', ..., 222n', 201, 401, 1#, ..., n#) étant configuré pour connecter au moins deux fibres, comprenant :
une enveloppe (101), configurée pour créer au moins deux cavités qui sont situées à deux extrémités relatives de l'enveloppe ;
les cavités (102) étant configurées pour permettre l'insertion ou le retrait de fibres ;
un capteur (224a, ..., 224n), qui ne vient pas au contact d'une fibre lorsque la fibre est insérée dans l'une des cavités ou en est retirée ; et
un détecteur d'état (324), configuré pour détecter un changement de paramètre du capteur lorsqu'une fibre est insérée dans l'adaptateur de fibre ou en est retirée, et pour déterminer l'état de connexion de la fibre conformément au résultat de détection.
